(19) Europäisches Patentamt
European Patent Office
Office européen des brevets

(11) EP 3 768 784 B1

(12) **EUROPEAN PATENT SPECIFICATION**

(45) Date of publication and mention of the grant of the patent:
**28.08.2024 Bulletin 2024/35**

(21) Application number: **19770564.3**

(22) Date of filing: **19.03.2019**

(51) International Patent Classification (IPC):
***C09D 7/63*** *(2018.01)* ***C09D 163/00*** *(2006.01)*
***C09D 5/08*** *(2006.01)* ***C09D 5/16*** *(2006.01)*
***C09D 7/61*** *(2018.01)* ***C09D 7/80*** *(2018.01)*

(52) Cooperative Patent Classification (CPC):
(C-Sets available)
**C09D 5/00; C09D 5/08; C09D 5/084; C09D 5/16; C09D 5/1687; C09D 7/40; C09D 7/61; C09D 7/63; C09D 7/70; C09D 163/00;** C08K 3/042 (Cont.)

(86) International application number:
**PCT/CA2019/050334**

(87) International publication number:
**WO 2019/178682 (26.09.2019 Gazette 2019/39)**

(54) **MULTIFUNCTIONAL COATINGS FOR USE IN WET ENVIRONMENTS**

MULTIFUNKTIONSBESCHICHTUNGEN ZUR VERWENDUNG IN NASSEN UMGEBUNGEN

REVÊTEMENTS MULTIFONCTIONNELS POUR UNE UTILISATION DANS DES ENVIRONNEMENTS HUMIDES

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **20.03.2018 US 201862645504 P**

(43) Date of publication of application:
**27.01.2021 Bulletin 2021/04**

(73) Proprietor: **Graphite Innovation and Technologies Inc.**
**Dartmouth NS B2Y 4M9 (CA)**

(72) Inventors:
- **GAIER, Marciel**
  **Eastern Passage, NS B3G 1P2 (CA)**
- **ALGERMOZI, Mohammed**
  **Halifax, NS B3M 4X3 (CA)**

(74) Representative: **Grünecker Patent- und Rechtsanwälte**
**PartG mbB**
**Leopoldstraße 4**
**80802 München (DE)**

(56) References cited:
**WO-A1-2017/100294** **WO-A2-2009/106507**
**US-A1- 2008 268 318** **US-A1- 2010 000 441**
**US-A1- 2017 101 571**

- **GOGOI ET AL.: "Jatropha curcas oil based alkyd/epoxy/graphene oxide (GO) bionanocomposites: Effect of GO on curing, mechanical and thermal properties", PROG. ORG. COAT., vol. 84, 2015, pages 128 - 135, XP055638309**
- **WEI ET AL.: "Processing of Epoxy/Graphene Nanocomposites: Effects of Surfactants", J. POLYM. SCI. APPL., vol. 1, no. 1, 2017, pages 1 - 7, XP055638312**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 3 768 784 B1



(Cont. next page)

(52) Cooperative Patent Classification (CPC): (Cont.)

C-Sets
**C09D 163/00, C08K 3/042, C08L 99/00**

## Description

### FIELD OF THE INVENTION

The present invention relates to multifunctional coatings for use in wet environments. More specifically, the present invention is concerned with low-friction, foul-releasing, anticorrosion, mechanically-enhanced coatings for such use.

### BACKGROUND OF THE INVENTION

#### Fouling, Corrosion, and Anticorrosion/Foul-Releasing Coatings

Fouling is the accumulation of unwanted material on solid surfaces to the detriment of function. The fouling materials can consist of either living organisms such as microorganisms, plants, algae, or animals (biofouling) or a non-living substance (inorganic and/or organic). Fouling is usually distinguished from other surface-growth phenomena, in that it occurs on a surface of a component, system or plant performing a defined and useful function, and that the fouling process impedes or interferes with this function. Fouling phenomena are common and diverse, ranging from fouling of ship hulls, natural surfaces in the marine environment (marine fouling), fouling of heat-transfer components through ingredients contained in the cooling water or gases.

Corrosion is a well-known a process, which converts a refined metal to a more chemically-stable form, such as its oxide, hydroxide, or sulfide. It is the gradual destruction of materials (usually metals) by chemical and/or electrochemical reaction with their environment. Corrosion occurs particularly in objects which are exposed to water and/or humidity, for example those exposed to the weather, salt water, and other hostile environments.

Hence, fouling and corrosion are both common on surface exposed to water/humidity, such as ship components and other surface exposed to the marine environment as well as surfaces of apparatus containing water (heat-transfer apparatus and the like).

Coatings to prevent corrosion, prevent fouling and/or are foul-releasing play an increasingly important role because of new environmental regulations and that fact that the dispersion of invasive species into the marine ecosystem causes important environmental problems in national and international waters. Hence, the industry of marine coatings should be worth \$10.4 Billion by 2019. The main factors that contribute for the market growth are extensive use of coatings to ensure long-term protection of marine assets and the implementation of IMO ballast tank coating rules. Strict environmental regulations and customer preference for eco-friendly products are also boosting the previsions.

**US 2017/ 101571 A1 relates to 2-dimensional thermal conductive materials and their use.**

#### Epoxy Coatings

"Epoxy" can refer to either A) any of the basic components or B) the cured end products of epoxy resins. It is also a colloquial name for the epoxide functional group

( 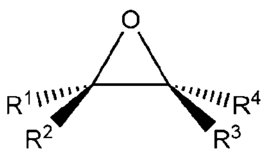 ).

Epoxy resins, also known as polyepoxides, are a well-known class of reactive prepolymers and polymers which contain epoxide groups. Epoxy resins may be reacted (i.e. "cross-linked" or "cured") either with themselves through catalytic homopolymerisation, or with a wide range of co-reactants including polyfunctional amines, acids (and acid anhydrides), phenols, alcohols and thiols. These co-reactants are often referred to as hardeners or curatives, and the cross-linking reaction is commonly referred to as curing.

Reaction of an epoxy resin with itself or with a hardener forms an epoxy thermoset polymer, often with favorable mechanical properties and generally high thermal and chemical resistance. Epoxy resins thus have a wide range of applications, including metal coatings, use in electronics/electrical components/LEDs, high tension electrical insulators, paint brush manufacturing, fiber-reinforced plastic materials and structural adhesives.

Epoxy resins are used in coatings, in which the cure of the epoxy resin, after its application to a surface, results in a solid coating. Epoxy coatings are typically formulated based on the end product's performance requirements. When

properly catalyzed and applied, epoxies produce a hard, chemical and solvent resistant finish. It is the specific selection and combination of the epoxy and hardener components that determine the final characteristics and suitability of the epoxy coating for a given environment.

Epoxy coatings are popular because they provide a quick-drying, tough and protective coating. Unlike traditional heat cured powder coatings, epoxy coatings are quick and easy to apply, which make them ideal for many applications. For example, they are typically used on concrete and steel to give resistance to water, alkali and acids. Metal cans and containers are often coated with epoxy to prevent rusting. They are usually used in industrial, automotive and marine applications. Furthermore, fusion bonded epoxy powder coatings are extensively used for corrosion protection of steel pipes and fittings used in the oil and gas industry, portable water transmission pipelines (steel) and reinforcing bars.

Epoxy coatings offers significant corrosion resistance, however water permeability happens over time, for example after 2 to 5 years. This causes significant wear and failure of the material, resulting the need for a new coating application. The most common defects behind epoxy resins failures are crystalline defects created during the curing of the resin, micro-cracks, pinholes and structure-induced defects. These defects undesirably allow water, oxygen and/or corrosive ions to penetrate in the resin, e.g. in the epoxy coating. Unfortunately, the emergence of these defects is inevitable. Conventionally, the corrosion resistance of such coatings is increased be adding some high-barrier fillers, such as graphite or ceramic particles with large lamellar structure, which increase these species diffusion path in the coating, making it difficult for them to reach the metal surface and cause corrosion.

While affording some protection against corrosion, epoxy coatings do not have significant antifouling/foul-releasing properties.

Epoxy coatings typically also exhibit rather high coefficient of friction, which may be deleterious for some applications, in particular, in applications in which the aero/hydrodynamic performance of the coated piece is of import. For example, frictional resistance can account for up to 90% of the total resistance experienced by ships. Therefore, alower coefficient of friction is desirable to achieve higher speeds, decrease fuel consumption, and achieve higher efficiency.

## SUMMARY OF THE INVENTION

The subject matter of the invention is as set out in the appended claims.

In accordance with the present invention, there is provided:

1. A coating composition according to appended claim 1.

Preferred embodiments of the present invention are set forth in the dependent claims.

In an embodiment, the substrate is free of a primer coating between the surface of the substrate and the at least one coat of a multifunctional coating.

In an embodiment, the substrate is free of a tie coat between the surface of the substrate and the at least one coat of a multifunctional coating.

In an embodiment, the substrate further comprises at least one coat of a primer coating between the surface of the substrate and the at least one coat of a multifunctional coating.

In an embodiment, the substrate, comprises two coats of the primer coating.

In an embodiment, the substrate is free of a tie coat between the at least one primer coat and the at least one coat of a multifunctional coating.

In an embodiment, the substrate, comprises least two coats of the multifunctional coating.

In an embodiment of the substrate at least one coat of the multifunctional coating together have a total thickness from about 1 $\mu$m to about 400 $\mu$m, preferably from about 100 $\mu$m to about 200 $\mu$m.

In an embodiment of the method or the substrate the substrate is for use in a wet environment.

In an embodiment, the substrate is a marine equipment, a sensor for use in a wet environment, an automobile part, an agriculture equipment, an aquiculture equipment, a water-power generation equipment, or an oil-gas industry equipment, preferably a marine equipment or a sensor for use in a wet environment.

Preferably, the marine equipment is a boat, a ship or a vessel (preferably a hull or a ballast thereof), a buoy, a fish trap, an underwater equipment, or a submarine; preferably a ship hull.

In a preferred embodiment, the thermosetting resin system is a two-part thermosetting resin system comprising a hardener and a thermosetting resin and wherein the graphene nanoplatelets and the natural or synthetic oil are dispersed in either or both of the hardener and the thermosetting resin.

In a preferred embodiment, at least part of the natural or synthetic oil is dispersed in the thermosetting resin.

In a preferred embodiment, at least part of the natural or synthetic oil is dispersed in the hardener.

In a preferred embodiment, the graphene nanoplatelets and the natural or synthetic oil are dispersed in the hardener.

In a preferred embodiment, fatty amides are dispersed in the hardener.

In a preferred embodiment, fatty alkyl or alkenyl carboxylates are grafted onto the thermosetting resin.

In a preferred embodiment, the thermosetting resin system is a one-part thermosetting resin system.

In a preferred embodiment, fatty alkyl or alkenyl carboxylates are grafted onto the thermosetting resin contained in the one-component thermosetting resin system.

In a preferred embodiment, the one-part thermosetting resin system is a heat-curable thermosetting resin system. In a preferred embodiment, the thermosetting resin system comprises a silicon resin, a polyester resin, or an epoxy resin, more preferably a silicon resin or an epoxy resin, and most preferably an epoxy resin.

In a preferred embodiment, the epoxy resin is an aliphatic-bisphenol A epoxy resin.

In a preferred embodiment, the graphene nanoplatelets are up to 30 nm thick, preferably from 2 to 30 nm thick, and have a flake size from about 1 to about 100 $\mu$m, preferably from about 1 to about 25 $\mu$m.

In a preferred embodiment, the coating composition or the multifunctional coating has a graphene nanoplatelets content of up to 15 wt%, based on the total weight of the composition or multifunctional coating or the kit comprises the graphene nanoplatelets in an amount such that the coating composition to be produced with the kit has a graphene nanoplatelets content up to 15 wt%, based on the total weight of the composition.

In a preferred embodiment, the graphene nanoplatelets content is from about 0.001 to about 15 wt%, based on the total weight of the composition or multifunctional coating.

In a preferred embodiment, the graphene nanoplatelets content is:

- about 0.001, about 0.01, about 0.1, about 0.2, about 0.3, about 0.4, about 0.5, about 1, about 2, about 3, about 4, about 5, about 6, about 7, about 8, or about 9 wt% or more and/or
- about 15, about 12.5, about 10, about 9, about 8, about 7, about 6, about 5, about 4, about 3, about 2 or about 1 wt% or less,

based on the total weight of the composition or multifunctional coating.

In a preferred embodiment, the graphene nanoplatelets content is between about 0.1 and about 0.5 wt%, preferably is about 0.3 wt%, based on the total weight of the composition or multifunctional coating.

In a preferred embodiment, the natural canola oil, sunflower oil, or soybean oil, and more preferably canola oil.

In a preferred embodiment, the coating composition, kit, coating, or substrate of any one of items 1, 2 and 4 comprise the natural oil.

In a preferred embodiment, the coating composition or the multifunctional coating has an oil content of up to 10 wt%, based on the total weight of the composition or multifunctional coating or the kit comprises the natural oil or the synthetic oil in an amount such that the coating composition to be produced with the kit has an oil content up to 10 wt%, based on the total weight of the composition.

In a preferred embodiment, the oil content is from about 0.1 to about 10 wt%, based on the total weight of the composition or multifunctional coating.

In a preferred embodiment, the oil content is:

- about 0.1, about 1, about 2, about 3, about 4, about 5, about 6, or about 7 wt%, or more and/or
- about 10, about 9, about 8, about 7, about 5, about 4, about 3 wt% or less,

based on the total weight of the composition or multifunctional coating.

In a preferred embodiment, the oil content is between about 3 and about 7 wt%, preferably between about 4 and about 6 wt%, and more preferably about 5 wt% based on the total weight of the composition or multifunctional coating.

In a preferred embodiment, the composition, kit, coating or substrate comprises silver nanoparticles.

Preferably, the silver nanoparticles are nanoparticles of elemental silver or of a silver salt, preferably of elemental silver.

Preferably, the silver salt is trifluoromethanesulfonate, silver methanesulfonate, silver lactic acid salt, silver(I) 2-benzothiazolethiol salt, silver saccharin salt, silver 2-cyano-2-hydroxyimino-acetamide salt, silver 4-hydroxy-1(2H)-phthalazinone salt, silver 2-(4-cyclohexylbutyl)-3-hydroxy-1 ,4-naphthoquinone, silver nitrate, silver barium salt, silver chloride, silver carbonate, silver tetrafluoroborate, silver sulfate, silver perchlorate, silver iodide, silver nitrite, silver cyanide, silver bromide, silver hexafluorophosphate, silver(I) fluoride, silver perchlorate hydrate, silver chromate, silver cyanate, silver phosphate, silver thiocyanate, silver(II) fluoride, silver cyclohexanebutyrate, silver hexafluoroantimonate(V), silver citrate hydrate, silver chlorate, silver hexafluoroarsenate(V), silver(I) sulfadiazine, silver perchlorate monohydrate, silver metavanadate, or silver(I) perrhenate.

In a preferred embodiment, the silver nanoparticles are from about 1 to about 200 nm, preferably from about 5 to about 200 nm, in diameter.

In a preferred embodiment, the coating composition or the multifunctional coating has a silver nanoparticles content of up to 1000 ppm, based on the total weight of the composition or multifunctional coating or the kit comprises the silver nanoparticles in an amount such that the coating composition to be produced with the kit has a silver nanoparticles content up to 1000 ppm, based on the total weight of the composition.
Preferably, the silver nanoparticles content is from about 10 to about 1000 ppm, based on the total weight of the composition or multifunctional coating.
Preferably, the silver nanoparticles content is:

- about 10, about 25, about 50, about 75, about 100, about 150, about 200, about 250, about 250, or about 300 ppm or more and/or
- about 1000, about 750, about 500, about 250, about 100, about 50 ppm or less,

based on the total weight of the composition or multifunctional coating.
In a preferred embodiment, the composition, kit, or coated substrate is free of silver nanoparticles.
In an embodiment, the composition, kit, or coated substrate comprise copper powder.
Preferably, the copper powder is a powder of elemental copper, a copper oxide, or a copper salt, preferably a powder of elemental copper.
Preferably, the copper oxide is cuprous oxide.
Preferably, the copper salt is copper(I) bromide, copper(II) bromide, copper(I) bromide dimethyl sulfide, copper(I) chloride, copper(II) chloride, copper(II) chloride dihydrate, copper(II) cyclohexanebutyrate, copper(II) fluoride, copper(II) fluoride dihydrate, copper(II) D-gluconate, copper(II) hydroxide, copper(I) iodide, copper(II) nitrate, copper(II) nitrate hemi(pentahydrate), copper(II) nitrate hydrate, copper(II) perchlorate hexahydrate, copper(II) pyrophosphate, copper(II) pyrophosphate hydrate, copper(II) selenite, copper(II) selenite dihydrate, copper(II) sulfate, copper(II) sulfate pentahydrate, copper(II) tartate, copper(II) tartate hydrate, copper(II) tetrafluoroborate, copper(II) tetrafluoroborate hydrate, copper(I) thiocyanate, or tetraaminecopper(II) sulfate monohydrate.
In an embodiment, the coating composition or the multifunctional coating has a copper powder content of up to 20 wt%, based on the total weight of the composition or multifunctional coating or the kit comprises the copper powder in an amount such that the coating composition to be produced with the kit has a copper powder content up to 20 wt%, based on the total weight of the composition.
In an embodiment, the copper powder content is from about 2 to about 20 wt%, based on the total weight of the composition or multifunctional coating.
In an embodiment, the copper powder content is:

- about 2, about 5, about 8, about 10, about 12.5, about 15 wt% or more and/or
- about 20, about 18, about 16, about 14, about 12, or about 10 wt% or less,

based on the total weight of the composition or multifunctional coating.
In an embodiment, the composition, kit or substrate is free of copper powder.
In a preferred embodiment, the composition, kit or coated substrate comprise titanium nanoparticles.
Preferably, the titanium nanoparticles are nanoparticles of elemental titanium, titanium dioxide, or a titanium salt, preferably nanoparticles of titanium dioxide.
Preferably, the titanium salt is titanium(IV) bromide, titanium carbonitride, titanium(II) chloride, titanium (IV) chloride, titanium(iii) fluoride, titanium(IV) fluoride, titanium(IV) iodide, or titanium(IV) oxysulfate.
Preferably, the titanium nanoparticles are from about 5 to about 500 nm in size.
In an embodiment, the coating composition or the multifunctional coating has a titanium nanoparticles content of up to 8 wt%, based on the total weight of the composition or multifunctional coating or the kit comprises the titanium nanoparticles in an amount such that the coating composition to be produced with the kit has a titanium nanoparticles content up to 8 wt%, based on the total weight of the composition.
Preferably, the titanium nanoparticles content is from about 0.05 to about 8 wt%, based on the total weight of the composition or multifunctional coating.
Preferably, the titanium nanoparticles content is:

- about 0.05, about 0.1, about 0.5, about 0.75, about 1, about 2, about 3, about 4 wt% or more and/or
- about 8, about 7, about 6, about 5, about 4 wt% or less,

based on the total weight of the composition or multifunctional coating.

In an embodiment, the composition, kit or coated substrate is free of titanium nanoparticles.

In an embodiment, the composition, kit or coated substrate comprise sepiolite.

Preferably, the coating composition or the multifunctional coating has a sepiolite content of up to 15 wt%, based on the total weight of the composition or multifunctional coating, or the kit comprises sepiolite in an amount such that the coating composition to be produced with the kit has a sepiolite content up to 15 wt%, based on the total weight of the composition.

Preferably, the sepiolite content is from about 1 to about 15 wt%, based on the total weight of the composition or multifunctional coating.

Preferably, the sepiolite content is:

- about 1, about 2, about 3, about 4, about 5, about 6, about 7, or about 8 wt% or more and/or
- about 15, about 12, about 10, about 9, about 8, about 7, or about 6 wt% or less,

based on the total weight of the composition or multifunctional coating.

In an embodiment, the composition, kit or coated substrate is free of sepiolite.

In an embodiment, the composition, kit or coated substrate further comprise phosphorous, zinc sulfide, strontium aluminate, or a mixture thereof, and preferably a mixture of phosphorous, zinc sulfide, and strontium aluminate.

Preferably, the coating composition or the multifunctional coating has a phosphorous content of up to 5 wt%, a zinc sulfide content of up to 5 wt%, and a strontium aluminate content of up to 5 wt%, based on the total weight of the composition or multifunctional coating or the kit comprises phosphorous, zinc sulfide, and strontium aluminate in amounts such that the coating composition to be produced with the kit has a phosphorous content of up to 5 wt%, a zinc sulfide content of up to 5 wt%, and a strontium aluminate content of up to 5 wt%, based on the total weight of the composition.

Preferably, the phosphorous content is about 1 wt%, the zinc sulfide content is about 1 wt%, and the strontium aluminate content is about 1 wt%, based on the total weight of the composition.

In an embodiment, the composition, kit or coated substrate is free of phosphorous, zinc sulfide, and strontium aluminate.

In an embodiment, the composition, the kit, or the multifunctional coating comprises:

- graphene nanoplatelets, and
- canola oil,

wherein the coating composition or the multifunctional coating has a graphene nanoplatelets content of about 0.3 wt% and a canola oil content of about 5 wt%, based on the total weight of the composition or the multifunctional coating or the kit comprises the graphene nanoplatelets and the canola oil in an amount such that the coating composition to be produced with the kit has a graphene nanoplatelets content of about 0.3 wt% and an oil content of about 5 wt%, based on the total weight of the composition.

In an embodiment the multifunctional coating is a low-friction, foul-releasing, anticorrosion, and/or mechanically-enhanced coating.

In an embodiment the multifunctional coating is a low-friction, foul-releasing, anticorrosion, and mechanically-enhanced coating.

In an embodiment the multifunctional coating is a low-friction coating, preferably having a coefficient of friction, as measured according to ASTM D7027-13, of about 0.08 or less, preferably about 0.05 or less, more preferably about 0.03 or less, and most preferably about 0.01 or less.

In an embodiment the multifunctional coating is a hydrophobic coating, preferably having a contact angle with deionized water of about 125° or more, preferably about 130° or more, more preferably 135° or more, and most preferably about 140° or more.

In an embodiment the multifunctional coating is a hydrophobic coating, preferably having a contact angle with ocean water of about 115° or more, preferably about 120° or more, more preferably 125° or more, and most preferably about 135° or more.

In an embodiment the multifunctional coating exhibits an ATP concentration in biofilm after 3 months of growth, as measured according to ASTM E2562-17, of 50 ng/$m^2$ or less, and preferably 25 ng/$m^2$.

In an embodiment the multifunctional coating is an anticorrosion coating, preferably having a corrosion rate, as measured according to ASTM G50 - 10(2015), of about 1 mm/year or less, preferably about 0.8 mm/year or less, more operably about 0.5 mm/year or less, yet more preferably about 0.25 mm/year or less, and most preferably about 0.15 mm/year or less.

In an embodiment the multifunctional coating is a mechanically-enhanced coating, preferably having:

- a tensile strength, as measured according to ASTM D 638-08, of about 70 MPa or more, preferably about 75 MPa or more, more preferably about 75 MPa or more, and most preferably about 75 MPa or more;
- a fracture toughness, as measured according to ASTM D 5045-99, of about 4 MPa $m^{1/2}$ or more, preferably about 5 MPa $m^{1/2}$ or more, more preferably about 6 MPa $m^{1/2}$ or more, and most preferably about 7 MPa $m^{1/2}$ or more; and/or
- a flexural strength, as measured according to ISO 178:1993(E) standard, of about 45 MPa or more, preferably about 50 MPa or more, more preferably about 55 MPa or more, and most preferably about 55 MPa or more.

In a preferred embodiment, the method of item 5 further comprises the step of abrading the surface between steps a) and b).

Preferably, the coating composition has been prepared from a kit according to the invention by dispersing the graphene nanoplatelets and the one or more of a) to e) in the thermosetting resin system.

Preferably, step b) is omitted and the at least one coat of the coating composition is applied in the absence of a primer coating between the surface and the multifunctional coating.

Preferably, at least one coat of the coating composition is applied in the absence of a tie coat between the surface of the substrate and the at least one coat of a multifunctional coating.

Preferably, step b) is present and the at least one coat of the coating composition is applied on at least one coat of a primer coating.

Preferably, the at least one coat of the coating composition is applied on two coats of the primer coating.

Preferably, at least one coat of the coating composition is applied in the absence of a tie coat between the at least one coat of a primer coating and the at least one coat of a multifunctional coating.

In an embodiment, the method comprises at least two coats of the coating composition.

In an embodiment, the multifunctional coating has a total thickness from about 1 $\mu$m to about 400 $\mu$m, preferably from about 100 $\mu$m to about 200 $\mu$m.

In an embodiment, the substrate is for use in a wet environment.

In an embodiment, the substrate is a marine equipment, a sensor for use in wet environments, an automobile part, an agriculture equipment, an aquiculture equipment, a water-power generation equipment, or an oil-gas industry equipment, preferably a marine equipment or a sensor for use in wet environments.

Preferably, the marine equipment is a boat, a ship or a vessel (preferably hulls and ballasts thereof), a buoy, a fish trap, an underwater equipment, or a submarine; preferably a ship hull.

Preferably, the multifunctional coating is as defined in any one of items 5 to 84.

## BRIEF DESCRIPTION OF THE DRAWINGS

In the appended drawings:

Fig. 1. shows the various layers of a typically prior art coating for use in a wet environment,
Fig. 2. shows the various layers of a coating for use in a wet environment according to an embodiment of the invention with A) and without b) primer coating (14),
Fig. 3. shows coatings as tested in Example 2 with a) excellent, b) average and c) poor antifouling efficacy,
Fig. 4. shows the degree of fouling of several samples as tested in Example 2 after an exposure of 5 months to fresh salt water,
Fig. 5. shows a) a coating with well-dispersed GNPs and a coating with not well dispersion GNPs,
Fig. 6. shows the coefficient of friction ($\mu$) of the epoxy resin alone (Coating no. 12), and
Fig. 7. shows the coefficient of friction ($\mu$a) of Coating no. 14.
Fig. 8. shows a coating of the invention after 3-hour drying time a) before and b) after (bottom) the tape test.
Fig. 9. shows a coating of the invention after 5-hour drying time a) before and b) after (bottom) the tape test.
Fig. 10. shows a coating of the invention after 7-hour drying time a) before and b) after (bottom) the tape test.
Fig. 11. shows a coating of the invention after 9-hour drying time a) before and b) after (bottom) the tape test.
Fig. 12. shows a coating of the invention after 24-hour drying time a) before and b) after (bottom) the tape test.
Fig. 13. shows a coating of the invention without underlying primer a) before and b) after (bottom) the tape test.
Fig. 14. shows a coating of the invention after the tape test - method B.
Fig. 15. shows the set-up for the flume tank evaluation reported in Example 12.
Fig. 16. shows the speed-induced drag measured as a function of speed for three coatings of the invention and a comparative uncoated plate.
Fig. 17. shows the friction coefficient for three coatings of the invention, a comparative uncoated plate, and a comparative ITTC-57 standard.

Fig. 18. is a scanning electron microscopy (SEM) image showing the degree of dispersion of the graphene nanoplatelets in coating no. 14.

Fig. 19. shows the surface quality of coating no. 14 when applied using industrial equipment.

Fig. 20. shows the deionized (DI) water and ocean water contact angles for coating no.14 and the Insterleek® 1 100SR coating.

Fig. 21. shows the deionized water contact angles measured for coating nos. 1 to 16.

Fig. 22. shows A) the coupons and B) the reactor used for biofilm growth.

Fig. 23. shows the ATP concentration in biofilms coated with Intersleek 1100SR and coatings nos. 1 to 14 and 39 to 45.

Fig. 24. shows (A) the hull of a 42 ft yacht being coated with coating no.14 and B) the coated hull.

## DETAILED DESCRIPTION OF THE INVENTION

Turning now to the invention in more details, there is provided a coating composition for producing a multifunctional coating, according to appended claim 1.

The present invention also provides a kit for producing a coating composition for producing a multifunctional coating, according to appended claim 14.

In embodiments, the kit further comprises instructions for dispersing the nanoplatelets and the natural oil or synthetic oil in the thermosetting resin system to produce a coating composition as defined above.

There is further described the use of the above composition and kit for producing a multifunctional coating on a surface of a substrate.

There is also described a coating system comprising at least one coat of a primer coating and at least one coat of a multifunctional coating on top of the primer coating, wherein the multifunctional coating comprises:

- a thermoset resin obtained by curing a thermosetting resin system,
- graphene nanoplatelets, and
- a natural oil or synthetic oil,

wherein the graphene nanoplatelets and the natural oil or synthetic oil are dispersed in the thermoset resin.

Furthermore, there is provided a coated substrate according to append claim 12**.**

In embodiments, the coating composition, kit, or multifunctional coating of the invention may further comprise one or more of components of a) to d):

a) silver nanoparticles,
b) a copper powder,
c) titanium nanoparticles, and
d) sepiolite,

wherein the one or more of components of a) to d) are dispersed (or, in in the case of the kit, are for dispersion) in the thermoset resin.

Herein, a "coating composition for producing a multifunctional coating" is a composition that can be applied to a substrate to form a multifunctional coating thereon. Herein, a "kit for producing a coating composition for producing a multifunctional coating, using a thermosetting resin system" is an ensemble of components that, once dispersed in the thermosetting resin system, will result in the coating composition for producing the multifunctional coating as defined above. Herein, a "coating system" is an assembly of at least two different coatings, and more specifically a primer coating and the multifunctional coating. Furthermore, herein, a coated substrate is substrate having at least one of its surfaces coated with the primer coating and the multifunctional coating.

The coating composition (both the composition of the invention and the composition prepared using the kit of the invention) and the multifunctional coating are comprised of the thermosetting resin system in which the various other components of the composition (i.e. the graphene nanoplatelets, the natural or synthetic oil, the one or more components a) to d) as well as further components discussed below) are dispersed, preferably substantially uniformly dispersed.

In the kit of the invention, the graphene nanoplatelets, the natural or synthetic oil, the above components a) to d), and any further component (discussed below) can be provided separately from each other and/or mixed together. In embodiments, for example, the natural or synthetic oil is provided separately while the other components (solids) are provided as a mixture. In alternative embodiments, all the components of the kit are provided as a single mixture. As noted above, the multifunctional coating produced using the coating composition of the invention and the kit of the invention and comprised in the coating system and coated substrate of the invention is advantageously a low-friction, foul-releasing, anticorrosion, and/or mechanically-enhanced and, as such, are particularly suitable for use in wet environments. In preferred embodiment, the multifunctional coating is a low-friction, foul-releasing, anticorrosion, and mechanically-enhanced coating.

In preferred embodiment, the multifunctional coating is a low-friction coating, preferably having a coefficient of friction, as measured according to ASTM D7027-13, of about 0.08 or less, preferably about 0.05 or less, more preferably about 0.03 or less, and most preferably about 0.01 or less.

In preferred embodiment, the multifunctional coating is hydrophobic coating, preferably having a contact angle with deionized water of about 125° or more, preferably about 130° or more, more preferably 135° or more, and most preferably about 140° or more and/or preferably having a contact angle with ocean water of about 115° or more, preferably about 120° or more, more preferably 125° or more, and most preferably about 135° or more.

In preferred embodiment, the multifunctional coating is a foul-releasing coating, preferably exhibiting an ATP concentration in biofilm after 3 months of growth, as measured according to ASTM E2562-17, of 50 $ng/m^2$ or less, preferably 25 $ng/m^2$.

In preferred embodiment, the multifunctional coating is an anticorrosion coating, preferably having a corrosion rate, as measured according to ASTM G50 - 10(2015), of about 1 mm/year or less, preferably about 0.8 mm/year or less, more operably about 0.5 mm/year or less, yet more preferably about 0.25 mm/year or less, and most preferably about 0.15 mm/year or less.

In preferred embodiment, the multifunctional coating is a mechanically-enhanced coating, preferably having any one or more (preferably all) of:

a tensile strength, as measured according to ASTM D 638-08, of about 70 MPa or more, preferably about 75 MPa or more, more preferably about 75 MPa or more, and most preferably about 75 MPa or more;

a fracture toughness, as measured according to ASTM D 5045-99, of about 4 MPa $m^{1/2}$ or more, preferably about 5 MPa $m^{1/2}$ or more, more preferably about 6 MPa $m^{1/2}$ or more, and most preferably about 7 MPa $m^{1/2}$ or more; and/or

a flexural strength, as measured according to ISO 178:1993(E) standard, of about 45 MPa or more, preferably about 50 MPa or more, more preferably about 55 MPa or more, and most preferably about 55 MPa or more.

### Thermosetting Resin Systems

Herein, a "thermosetting resin" is viscous liquid monomer, prepolymer, or polymer that changes irreversibly into an infusible, insoluble polymer network by curing. Curing of a thermosetting resin produces a cured polymeric material called herein a "thermoset". The cure of a thermosetting resin typically involves crosslinking or chain extension through the formation of covalent bonds between individual chains of the polymer. Thermosets are generally characterized by rigid, three-dimensional structures and high molecular weights; they stay out of shape when deformed and undergo permanent or plastic deformation under load, and normally decompose when heated instead of melting. Indeed, thermosets cannot be melted and re-shaped after they have been cured. This is in contrast with thermoplastics, which are commonly produced in pellets, and shaped.

Thermosetting resins can be cured in two ways:

- either the resin reacts with itself through catalytic homopolymerisation, i.e. polymerization in the present of a catalyst, or
- the resin reacts with a co-reactant called a hardener.

Thermosetting resins that react with themselves via a catalytic reaction are typically provided in a single container comprising both the thermosetting resin and the catalyst. These are called "mono-component" (or "onecomponent" or "one-part") resin systems. The resin in these systems will cure when the system is applied to a substrate either because the system reacts with one component in air (typically $H_2O$ or $O_2$) or because the system is sensitive to and exposed to heat (heat-curable thermosetting resin systems) or radiation (typically UV, radiation-curable thermosetting resin systems).

Thermosetting resins that react with a hardener are typically provided in two separate containers: one container containing the thermosetting resin and another container containing the hardener. These are called bi-component (or "two-component" or "two-part") resin systems. To use such system, the resin is first mixed with the hardener, which will trigger the cure of the resin. Then, the resulting mixture is applied to a substrate. The application of heat or radiation is typically not necessary for the cure of bi-component resin systems.

Thus, herein, a "thermosetting resin system" is a resin system comprising a thermosetting resin or a mixture thereof, together with an appropriate catalyst or a hardener.

The thermosetting resin system in the coating composition and the kit of the invention can be either a mono-component resin system or bi-component resin system.

In preferred embodiments, the thermosetting resin system is a bi-component thermosetting resin system. Such bi-component thermosetting resin systems typically comprises the hardener and the thermosetting resin in a hardener:resin ratio of from about 1:1/2 to about 1:5. As noted above, in the coating composition (of the invention or produced with the kit of the invention), the graphene nanoplatelets, components a) to e) as well as the further optional components discussed below are dispersed, preferably substantially uniformly dispersed, in the thermosetting resin system. When the thermosetting resin system is a bi-component thermosetting resin system, this means that these various components are dispersed in either or both of the hardener and the thermosetting resin. In preferred embodiments, the graphene nanoplatelets, components a) to e) as well as the further optional components discussed below are dispersed in the hardener part of the thermosetting resin system.

In alternative embodiments, the thermosetting resin system is a mono-component resin system, preferably a heat-curable thermosetting resin system.

The resin system in the coating composition and the kit of the invention can comprise, in embodiments, only one thermosetting resin or, in other embodiments, a mixture of thermosetting resins.

Thermosetting resin systems are well-known to the skilled person and widely available commercially. Such resin systems are typically sold with instructions for their use or such instructions are otherwise available to the skilled person. For example, the curing conditions are typically widely available. Also, the catalysts and/or hardeners compatible with use of a given thermosetting resin are also known or, most often, provided with the resin itself (i.e. as a ready-to-use resin system). Indeed, resin systems are readily available in the commerce where they are sold preformulated as mixtures containing one or more thermosetting resins, one or more hardeners and/or catalysts, accelerators, additives, etc.

Thermosetting resin systems can cure in as little as 2 minutes, or take longer, depending on the nature and concentration of the resin/catalyst/hardener as well as the curing conditions.

Thermoset resins encompassed that can be used in the coating composition and the kit of the invention include the following:

| |
|---|
| **Allyl resins**<br>Thermosetting transparent abrasion-resistant synthetic resins or plastics made usually from esters derived from allyl alcohol or allyl chloride |
| **Amino resins (also called aminoplasts)**<br>Thermoset prepolymers formed by copolymerisation of amines or amides with an aldehyde. These include ureaformaldehyde and melamine-formaldehyde resins. |
| **Polyester resins**<br>Polyester resins are unsaturated synthetic resins formed by the reaction of dibasic organic acids and polyhydric alcohols. Maleic Anhydride is a commonly used raw material with diacid functionality. |
| **Bis-maleimides (BMI) resins**<br>Formed by the condensation reaction of a diamine with maleic anhydride, and processed basically like epoxy resins (350 °F (177 °C) cure). |
| **Cyanate ester resins**<br>The reaction of bisphenols or multifunctional phenol novolac resins with cyanogen bromide or chloride leads to cyanate functional monomers which can be converted in a controlled manner into cyanate ester functional prepolymer resins by chain extension or copolymerization. |
| **Epoxy resins (also called epoxides)**<br>Epoxy resins are thermosetting prepolymers made either by the reaction of epichlorohydrin with hydroxyl functional aromatics, alcohols, thiols, acids (and acid anhydrides), cycloaliphatics and aliphatics, polyfunctional amines, or amine functional aromatics, or by the oxidation of unsaturated cycloaliphatics. Epoxide functional resins and prepolymers cure by polyaddition/copolymerisation or homopolymerisation depending on the selection of crosslinker, hardener, curing agent or catalyst as well as by the temperature. |
| **Furan resins**<br>Furan resin prepolymers made from furfuryl alcohol, or by modification of furfural with phenol, formaldehyde, urea or other extenders, are similar to amino and phenolic thermosetting resins in that cure involves polycondensation and release of water as well as heat. While they are generally cured under the influence of heat, catalysts and pressure, furan resins can also be formulated as dual-component no-bake acid-hardened systems which are characterised by high resistance to heat, acids and alkalies. |

(continued)

| |
|---|
| **Phenolic resins**<br>Phenolic resins are products of phenolic derivatives, such as phenol resorcinol, with aldehydes, such as formaldehyde furfural.<br>Phenolic resins include novolacs and resoles. Novolacs are made with acid catalysts and a molar ratio of formaldehyde to phenol of less than one to give methylene linked phenolic oligomers; resoles are made with alkali catalysts and a molar ratio of formaldehyde to phenol of greater than one to give phenolic oligomers with methylene and benzylic ether-linked phenol units. |
| **Polyurea resins**<br>Thermoset elastomeric polymers with carbamide (-NH-CO-NH-) links made by combining diisocyanate monomers or prepolymers with blends of long-chain amine-terminated polyether or polyester resins and short-chain diamine extenders. |
| **Polyurethane resins**<br>Thermoset polyurethane prepolymers with carbamate links are linear and elastomeric is formed by combining diisocyanates with long chain diols, or crosslinked and rigid if formed from combinations of polyisocyanates and polyols. |
| **Silicone resins**<br>Silicone resins are partly organic in nature with a backbone polymer structure made of alternating silicon and oxygen atoms rather than the familiar carbon-to-carbon backbone characteristics of organic polymers. In addition to having at least one oxygen atom bonded to each silicone atom, silicone resins have direct bonds to carbon and therefore also known as polyorganosiloxanes. They have the general formula $(R_2SiO)_n$ and the physical form (liquid, gel, elastomer or solid) and use varies with molecular weight, structure (linear, branched, caged) and nature of substituent groups (R = alkyl, aryl, H, OH, alkoxy). Aryl substituted silicone resins have greater thermal stability than alkyl substituted silicone resins when polymerised (condensation cure mechanism) at temperatures between ~300 °F (~150 °C) and ~400 °F (~200 °C). Heating above ~600 °F (~ 300 °C) converts all silicone polymers into ceramics since all organic constituents pyrolytically decompose leaving crystalline silicate polymers with the general formula $(-SiO_2-)_n$. In addition to applications as ceramic matrix composite precursors, silicone resins in the form of polysiloxane polymers made from silicone resins with pendant acrylate, vinyl ether or epoxy functionality find application as UV, electron beam and thermoset polymer matrix composites where they are characterised by their resistance to oxidation, heat and ultraviolet degradation. |
| **Vinyl esters resins**<br>Vinyl ester resins made by addition reactions between an epoxy resin with derivatives of acrylic acid such as methacrylic acid, when diluted/dissolved in a vinyl functional monomer such as styrene, polymerise like unsaturated polyester resins. The resulting thermosets are notable for their high adhesion, heat resistance and corrosion resistance, and are stronger than polyesters and more resistant to impact than epoxies. |

In embodiments, the thermosetting resin systems comprises a silicon resin, a polyester resin, or an epoxy resin, preferably a silicon resin or an epoxy resin, and more preferably an epoxy resin. Preferred resins include epoxy resins, preferably aliphatic-bisphenol A epoxy resin.

## Graphene nanoplatelets

The theoretical definition is graphene it is "a fullerene consisting of bonded carbon atoms in sheet form one atom thick" or "an allotrope (form) of carbon consisting of a single layer of carbon atoms arranged in a hexagonal lattice". This material is known to be about 300 times stronger than steel, harder than diamond, a fantastic conductor of heat and electricity, while being very flexible.

Graphene nanoplatelets (GNPs) are a sub-form of graphene. Instead of being one-atom thick, GNPs are thicker and can comprise up to 60 layers of graphene (and thus be up to about 30 nm thick). This material can be manufactured with different flake sizes (from 1 to 100 μm). The manufacture of graphene nanoplatelets is known and can be effected, for example, following the teachings of La *et al.* in *ChemistrySelect* 2016, 5, 949 -952. With a view to maximizing corrosion resistance, in embodiments, graphene nanoplatelets with smaller thickness to flake size ratios, i.e. thin large flakes, are preferred. In preferred embodiments, the graphene nanoplatelets are about 2 to about 30 nanometers thick (which means about 4 to about 60 graphene layers) with flake size from about 1 to about 25 μm in size.

The graphene nanoplatelets have several beneficial effects on the properties of a coating obtained using a

coating composition of the invention (or a coating composition prepared using the kit of the invention). First, the graphene nanoplatelets functions as a chemical barrier against corrosion. Indeed, the use of few wt% of graphene nanoplatelets can increase corrosion resistance up to about 20-fold (compared to a coating comprising the thermosetting resin only). Secondly, the graphene nanoplatelets provide solid lubrification and thus reduce coefficient of friction of the coating. Furthermore, the graphene nanoplatelets increase both the mechanical strength and the adhesion of the coating. Finally, the graphene nanoplatelets increase the foul-releasing efficacy of the coating.

In embodiments, the graphene nanoplatelets may optionally be functionalized, for example with organic groups (such as molecular linkers, proteins) or inorganic solids (such as metal nanoparticles and oxide semiconductors). In preferred embodiments however, the graphene nanoplatelets are not functionalized.

In embodiments, the coating composition and the multifunctional coating of the invention comprises up to 15 wt% of graphene nanoplatelets, based on the total weight of the composition (or multifunctional coating). Similarly, in embodiments, the kit of the invention comprises graphene nanoplatelets in an amount such that the coating composition to be produced with the kit comprises up to 15 wt% of graphene nanoplatelets, based on the total weight of the composition.

In fact, in embodiments, the coating composition (of the invention or prepared using the kit of the invention) and the multifunctional coating can comprise from about 0.001 to about 15 wt% of graphene nanoplatelets, based on the total weight of the composition. In embodiments, this coating composition and the multifunctional coating comprise:

- about 0.001, about 0.01, about 0.1, about 0.2, about 0.3, about 0.4, about 0.5, about 1, about 2, about 3, about 4, about 5, about 6, about 7, about 8, or about 9 wt% or more and/or
- about 15, about 12.5, about 10, about 9, about 8, about 7, about 6, about 5, about 4, about 3, about 2 or about 1 wt% or less of graphene nanoplatelets, based on the total weight of the composition.

In fact, the Examples below show that the amount of graphene present can be chosen according to the exact end properties desired for the coating. A GNP content of about 0.3 wt% is preferable when minimal coefficient of friction is desired. A GNP content of about 5 wt % is preferable when maximal foul-releasing efficacy is desired. A GNP content of about 6 wt % is preferable when maximal tensile strength and/or maximal indentation fracture resistance is desired. A GNP content of about 8 wt % is preferable when maximal corrosion resistance is desired. A GNP content of about 9 wt % is preferable when maximal flexural strength is desired. (All wt % being based on the total weight of the composition.)

In most preferred embodiments, the graphene nanoplatelets content is between about 0.1 and about 0.5 wt%, preferably is about 0.3 wt%, based on the total weight of the composition or multifunctional coating

**Natural or Synthetic Oil**

As noted above, the coating composition/kit/multifunctional coating comprise a natural or synthetic oil, preferably a natural oil.

The natural oil is *Albizia benth* oil, anchovy oil, argemone oil, avocado oil, canola oil, *Capparis zeylanica* oil, *Cardamine impatiens* oil, castor oil, coconut oil, *Coriaria* oil, corn oil, cottonseed oil, crambe oil, fish oil, grape seed oil, hemp oil, laurel oil, lesquerollic acid, linseed oil, lumbang oil, meadowfoam seed oil, *Mesua ferrea* oil, mineral oil, mustard oil, neem oil, olive oil, palm oil, peanut oil, pongamia oil, radish oil, rapeseed oil, *Ricinus communis* oil, rubber seed oil, safflower oil, *Santalum album* oil, *Sebastiana commersoniana* oil, sesame oil, *Strophantus* oil, soybean oil, sugar apple (*Annona squamosa*) oil, sunflower oil, tigernut oil, or tung oil. Preferred natural oils include canola oil, sunflower oil, and soybean oil, and more preferably canola oil.

The synthetic oil is a polyalphaolefin oil, a diester oil, a polyolester oil, a phosphate ester oil, a polyalkylene glycol oil, or a silicone oil.

In preferred embodiments, the natural or synthetic oil is canola oil, sunflower oil, or soybean oil, preferably canola oil.

It has been surprisingly found that the presence of a natural or synthetic oil increases the foul-releasing efficacy of the coating. Furthermore, such oil lowered the coefficient of friction of the coating. In addition, the oil may confer an antibacterial effect to the coating. Finally, the oil desirably increases the hydrophobicity of the coating.

In embodiments, the coating composition or the multifunctional coating of the invention comprises up to 10 wt% of the natural or synthetic oil, based on the total weight of the composition or multifunctional coating. Similarly, in embodiments, the kit of the invention comprises the natural or synthetic oil in an amount such that the coating composition to be produced with the kit comprises up to 10 wt% of the natural or synthetic oil, based on the total weight of the composition.

In fact, in embodiments, the coating composition (of the invention or prepared using the kit of the invention) or the multifunctional coating comprises from about 0.1 to about 10 wt% of natural or synthetic oil, based on the total weight of the composition or the multifunctional coating. In embodiments, the coating composition or the multifunctional coating

comprises:

- about 0.1, about 1, about 2, about 3, about 4, about 5, about 6, or about 7 wt%, or more and/or
- about 10, about 9, about 8, about 7, about 5, about 4, about 3 wt% or less of the natural or synthetic oil, based on the total weight of the composition or the multifunctional coating.

In embodiments, the coating composition (of the invention or prepared using the kit of the invention) or the multifunctional coating comprises between about 3 and about 7 wt% preferably between about 4 and about 6 wt%, and more preferably about 5 wt% of natural or synthetic oil, based on the total weight of the composition or multifunctional coating. In fact, the Examples below show that an oil content of about 5 wt % is preferable when maximal foul-releasing efficacy and minimal coefficient of friction are desired.

In most preferred embodiments, the composition, kit, or the multifunctional coating of the invention comprises graphene nanoplatelets and canola oil, wherein the coating composition or the multifunctional coating has a graphene nanoplatelets content of about 0.3 wt% and a canola oil content of about 5 wt%, based on the total weight of the composition or the multifunctional coating or wherein the kit comprises the graphene nanoplatelets and the canola oil in an amount such that the coating composition to be produced with the kit has a graphene nanoplatelets content of about 0.3 wt% and an oil content of about 5 wt%, based on the total weight of the composition.

It has surprisingly been found by the inventors that the incorporation of an oil allows producing a coating exhibiting, after curing of the thermosetting resins system, long-lasting and pronounced hydrophobicity. This is believed to be due to reactions that:

- graft fatty alkyl or alkenyl carboxylates originating from the oil onto the thermosetting resin (before curing) and thermoset resin (after curing), and
- produce fatty amides dispersed in the thermosetting resin or the hardener (before curing) and dispersed in the thermoset resin (after curing).

In both cases, the long-chain hydrocarbon groups impart hydrophobicity and surface slip.

After curing, typical epoxy resins (and other thermosetting resin) comprise polar hydroxyl groups. Therefore, they tend to have low water contact angles and to be strongly hydrophilic, which promotes fouling. The addition of an oil changes the cured resin itself rending the multifunctional coating of the invention strongly hydrophobic.

This effect will now be discussed using canola oil and an epoxy resin as an example.

Canola oil mainly comprises unsaturated and saturated fatty carboxylic acids. In fact, canola oil typically comprises:

| Fatty Acids in Canola oil | |
|---|---|
| Saturated (Total of about 6%) | Unsaturated (Total of about 92%) |
| 4% Palmitic acid 16:0<br>2% Stearic 18:0 | 52% Oleic acid 18:1 n-9<br>26% Linoleic acid 18:2 n-6<br>10% Linolenic acid 18:3 1-3 |

The symbol for an acid includes the total number of carbons and double bonds (e.g., 18:2), followed by the location of the start of the first double bond counting from the methyl end of the chain. (e.g., n-6) The double bonds in the more common unsaturated fatty acids have a cis configuration and are separated by a $-CH_2-$ group.

The ring-strained reactive epoxy groups of the epoxy resin and the fatty carboxylic acid groups of the oil can react together, which results in the grafting of fatty alkyl or alkenyl carboxylate groups on the epoxy resin. During curing, this so-grafted epoxy resin in the cross-linking reaction, which results in the incorporation of the fatty alkyl or alkenyl carboxylate groups in the crosslinked (i.e. cured) thermoset resin.

The reaction of a fatty carboxylic acid with an epoxy group is:

$R^1COOH$ + $R^2$ 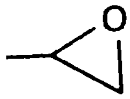 → $R^1COO\text{-}CH_2\text{-}CH(OH)\text{-}R^2$ (scheme 1)

Fatty carboxylic acid from the oil

Epoxy resin

Epoxy resin with grafted alkyl or alkenyl carboxylate group

wherein $R^1$ is a fatty alkyl or alkenyl group and $R^2$

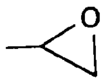

is the epoxy resin ($R^2$ is any organic compound used for epoxy resins).

Furthermore, amine hardeners used to cure the epoxy resin can also react with the fatty carboxylic acids, which yields fatty amides that, after curing, will be which becomes dispersed in the cured thermoset resin.

The reaction of a fatty carboxylic acid with a (primary) amine hardener is:

$$R^1COOH + R^3NH_2 \rightarrow R^1CONH_2 + R^3OH \qquad \text{(scheme 2)}$$

wherein $R^1$ a fatty alkyl or alkenyl group and $R^3NH_2$ is the (primary) amine hardener ($R^3$ is any organic compound used in amine hardeners).

Therefore, in embodiments, the coating composition/kit/multifunctional coating comprises a thermosetting resin (before curing) or a thermoset resin (after curing) with fatty alkyl or alkenyl carboxylates grafted onto the resin; these fatty alkyl or alkenyl carboxylate groups originating from a reaction between the resin and the oil.

Therefore, in embodiments, the coating composition/kit/multifunctional coating comprises fatty amides dispersed in the thermosetting resin (before curing) or a thermoset resin (after curing); these fatty amides originating from a reaction between the hardener and the oil

Herein, fatty carboxylic acids are groups of formula $R^1COOH$, wherein $R^1$ is a fatty alkyl or alkenyl group.

Herein, fatty alkyl or alkenyl carboxylates are monovalent radicals of formula $R^1COO$-, wherein $R^1$ is a fatty alkyl or alkenyl group.

Herein, fatty amides are groups of formula $R^1CONH_2$, wherein $R^1$ is a fatty alkyl or alkenyl group.

A fatty alkyl group is a monovalent saturated aliphatic hydrocarbon radical of general formula $C_nH_{2n+1}$, comprising 11 or more carbon atoms, preferably 15 or more carbon atoms, and more preferably 15 or 17 carbon atoms.

A fatty alkenyl group is a monovalent aliphatic hydrocarbon radical similar to an alkyl but comprising at least one double bond. Like the fatty alkyl groups, the fatty alkenyl groups comprise 12 or more carbon atoms, preferably 16 or more carbon atoms, and more preferably 16 or 18 carbon atoms. In embodiments, the fatty alkenyl groups comprise 1, 2 or 3 double bonds.

**Components a) to d)**

As noted above, the composition, kit, or the multifunctional coating of the invention may further comprise one or more of components a) to d):

a) silver nanoparticles,
b) a copper powder,
c) titanium nanoparticles, and
d) sepiolite.

In embodiments, the coating composition, kit, or multifunctional coating of the invention comprises:

- at least one of components a) to d),
- only one of components a) to d),
- at least two of components a) to d),
- exactly two of components a) to d),

- at least three of components a) to d),
- exactly three of components a) to d),
- all of components a) to d) above.

Embodiments in which the coating composition, kit, or multifunctional coating of the invention comprises at least one or only one of a) to d) above, include embodiments in which the composition, kit, or multifunctional coating comprises:

- component a) the silver nanoparticles,
- alternatively, component b) the copper powder,
- alternatively, component c) the titanium nanoparticles, or
- alternatively, component d) the sepiolite.

Embodiments in which the coating composition, kit, or multifunctional coating of the invention comprises at least two or exactly two of components a) to d) above include embodiments in which the coating composition, kit, or multifunctional coating comprises:

- component a) the silver nanoparticles and any one of components b), c), and d),
- alternatively, component b) the copper powder and any one of components a), c), and d),
- alternatively, component c) the titanium nanoparticles and any one of components a), b), and d), or
- alternatively, component d) the sepiolite and any one of components a), b), and c),

including embodiments in which the coating composition, kit, or multifunctional coating:

- component a) the natural or synthetic oil and component b) the copper powder,
- alternatively, component a) the silver nanoparticles and component c) the titanium nanoparticles,
- alternatively, component a) the silver nanoparticles and component d) the sepiolite,
- alternatively, component b) the copper powder and component c) the titanium nanoparticles,
- alternatively, component b) the copper powder and component d) the sepiolite, or
- alternatively, component c) the titanium nanoparticles and the component d) the sepiolite.

Embodiments in which the coating composition, kit, or multifunctional coating of the invention comprises at least three or exactly three of components a) to d) include embodiments in which the coating composition, kit, or multifunctional coating comprises:

- component a) the silver nanoparticles and any two of components b) to d),
- alternatively, component b) the copper powder and any two of components a), c), and d),
- alternatively, component c) the titanium nanoparticles and any two of components a), b), and d), or
- alternatively, component d) the sepiolite and any two of components a), b), and c),

including embodiments in which the coating composition, kit, or multifunctional coating comprises:

- component a) the silver nanoparticles, component b) the copper powder, and any one of components c) and d),
- alternatively, component a) the silver nanoparticles, component c) the titanium nanoparticles, and any one of components b), d) and e) above,
- alternatively, component a) the silver nanoparticles, component d) the sepiolite, and any one of components b), c) and e) above,
- alternatively, component b) the copper powder, component c) the titanium nanoparticles, and any one of components a), d), and e) above,
- alternatively, component b) the copper powder, component d) the sepiolite, and any one of components a), c), and e) above, or
- alternatively, component c) the titanium nanoparticles, component d) the sepiolite, and any one of components a), b), and e) above,

including embodiments in which the coating composition, kit, or multifunctional coating comprises:

- component a) the silver nanoparticles, component b) the copper powder, and component c) the titanium nanoparticles,

- component a) the silver nanoparticles, component b) the copper powder, and component d) the sepiolite,
- component a) the silver nanoparticles, component c) the titanium nanoparticles, and component d) the sepiolite, or
- component b) the copper powder, component c) the titanium nanoparticles, and component d) the sepiolite.

In alternative embodiments, the coating composition, kit, or multifunctional coating of the invention is free of component a), component b), component c) and/or component d).

**a) Silver Nanoparticles**

As noted above, the coating composition/kit/multifunctional coating can comprise silver nanoparticles. These nanoparticles are nanoparticles of elemental silver or of a silver salt. Preferably, the silver nanoparticles are nanoparticles of elemental silver.

Non-limiting example of suitable silver salts include silver trifluoromethanesulfonate, silver methanesulfonate, silver lactic acid salt, silver(I) 2-benzothiazolethiol salt, silver saccharin salt, silver 2-cyano-2-hydroxyimino-acetamide salt, silver 4-hydroxy-1(2H)-phthalazinone salt, silver 2-(4-cyclohexylbutyl)-3-hydroxy-1,4-naphthoquinone, silver nitrate, silver barium salt, silver chloride, silver carbonate, silver tetrafluoroborate, silver sulfate, silver perchlorate, silver iodide, silver nitrite, silver cyanide, silver bromide, silver hexafluorophosphate, silver(I) fluoride, silver perchlorate hydrate, silver chromate, silver cyanate, silver phosphate, silver thiocyanate, silver(II) fluoride, silver cyclohexanebutyrate, silver hexafluoroantimonate(V), silver citrate hydrate, silver chlorate, silver hexafluoroarsenate(V), silver(I) sulfadiazine, silver perchlorate monohydrate, silver metavanadate, and silver(I) perrhenate.

These nanoparticles can be of a variety of sizes, for example from about 1 to about 200 nm, preferably from about 5 to about 200 nm, in diameter.

These nanoparticles can be functionalized or coated to provide a desired function to the particle, for example ease its dispersion in the resin system. In preferred embodiments, the silver nanoparticles are not functionalized.

It has been surprisingly found that the presence of a silver nanoparticles increases the foul-releasing efficacy of the coating. Furthermore, such nanoparticles confer an antibacterial effect to the coating. Finally, the silver nanoparticles desirably increased the strength of the matrix of the coating.

In embodiments, the coating composition or the multifunctional coating of the invention comprises up to 1000 ppm of the silver nanoparticles, based on the total weight of the composition or the multifunctional coating. Similarly, in embodiments, the kit of the invention comprises the silver nanoparticles in an amount such that the coating composition to be produced with the kit comprises up to 1000 ppm of the silver nanoparticles, based on the total weight of the composition.

In fact, in embodiments, the coating composition (of the invention or prepared using the kit of the invention) or the multifunctional coating comprises from about 10 to about 1000 ppm of silver nanoparticles, based on the total weight of the composition or the multifunctional coating. In embodiments, the coating composition or the multifunctional coating comprises:

- about 10, about 25, about 50, about 75, about 100, about 150, about 200, about 250, about 250, or about 300 ppm or more and/or
- about 1000, about 750, about 500, about 250, about 100, about 50 ppm or less of silver nanoparticles, based on the total weight of the composition or the multifunctional coating.

In alternative embodiments, the coating composition/kit/multifunctional coating of the invention is free of silver nanoparticles.

**b) Copper Powder**

As noted above, the coating composition/kit/multifunctional coating can comprise a copper powder. This copper powder comprises particles of elemental copper, a copper oxide, preferably cuprous oxide ($Cu_2O$), or a copper salt. Preferably, the copper powder is an elemental copper powder (it will be understood that the particles of such powder can be passivated by a layer of copper oxide, as elemental copper oxidizes when exposed to air/humidity).

Non-limiting examples of suitable copper salt nanoparticles include copper(I) bromide, copper(II) bromide, copper(I) bromide dimethyl sulfide, copper(I) chloride, copper(II) chloride, copper(II) chloride dihydrate, copper(II) cyclohexanebutyrate, copper(II) fluoride, copper(II) fluoride dihydrate, copper(II) D-gluconate, copper(II) hydroxide, copper(I) iodide, copper(II) nitrate, copper(II) nitrate hemi(pentahydrate), copper(II) nitrate hydrate, copper(II) perchlorate hexahydrate, copper(II) pyrophosphate, copper(II) pyrophosphate hydrate, copper(II) selenite, copper(II) selenite dihydrate, copper(II) sulfate, copper(II) sulfate pentahydrate, copper(II) tartate, copper(II) tartate hydrate, copper(II) tetrafluoroborate, copper(II) tetrafluoroborate hydrate, copper(I) thiocyanate, and tetraaminecopper(II) sulfate monohydrate.

The particles in the powder can be of a variety of sizes, for example from about 0.5 to about 250 μm in size, preferably they can be less than 100 μm in size.

It has been surprisingly found that the presence of this copper powder increases the foul-releasing efficacy of the coating as it prevents the deposit of biofouling matter on the coating surface. Furthermore, this copper powder confers an antibacterial effect to the coating. Of note, the coating surprisingly does not significantly leach the copper in the environment (typically water), rather it remains strongly bound to, trapped in, and/or adhered to the thermoset matrix/graphene nanoplatelets.

In embodiments, the coating composition or the multifunctional coating of the invention comprises up to 20 wt% of the copper powder, based on the total weight of the composition or the multifunctional coating. Similarly, in embodiments, the kit of the invention comprises the copper powder in an amount such that the coating composition to be produced with the kit comprises up to 20 wt% of the copper powder, based on the total weight of the composition.

In fact, in embodiments, the coating composition (of the invention or prepared using the kit of the invention) or the multifunctional coating comprises from about 2 to about 20 wt% of the copper powder, based on the total weight of the composition or the multifunctional coating. In embodiments, the coating composition or the multifunctional coating comprises:

- about 2, about 5, about 8, about 10, about 12.5, about 15 wt% or more and/or
- about 20, about 18, about 16, about 14, about 12, or about 10 wt% or less of the copper powder, based on the total weight of the composition or the multifunctional coating.

In alternative embodiments, the coating composition/kit/multifunctional coating of the invention is free of copper powder.

**c) Titanium Nanoparticles**

As noted above, the coating composition/kit/multifunctional coating can comprise titanium nanoparticles. These nanoparticles are nanoparticles of elemental titanium, titanium dioxide ($TiO_2$), or a titanium salt. Preferably, the titanium nanoparticles are nanoparticles of titanium dioxide.

Non-limiting example of suitable titanium salts include titanium(IV) bromide, titanium carbonitride, titanium(II) chloride, titanium (IV) chloride, titanium(III) fluoride, titanium(IV) fluoride, titanium(IV) iodide, titanium(IV) oxysulfate.

The nanoparticles can be of a variety of sizes, for example from about 5 to about 500 nm in size.

It has been surprisingly found that titanium nanoparticles increase the foul-releasing efficacy of the coating as they prevent the deposit of biofouling matter on the coating surface. Furthermore, these nanoparticles confer an antibacterial effect to the coating.

In embodiments, the coating composition or the multifunctional coating of the invention comprises up to 8 wt% of the titanium nanoparticles, based on the total weight of the composition or the multifunctional coating. Similarly, in embodiments, the kit of the invention comprises the titanium nanoparticles in an amount such that the coating composition to be produced with the kit comprises up to 8 wt% of the titanium nanoparticles, based on the total weight of the composition.

In fact, in embodiments, the coating composition (of the invention or prepared using the kit of the invention) or the multifunctional coating comprises from about 0.05 to about 8 wt% of titanium nanoparticles, based on the total weight of the composition or the multifunctional coating. In embodiments, the coating composition or the multifunctional coating comprises:

- about 0.05, about 0.1, about 0.5, about 0.75, about 1, about 2, about 3, about 4 wt% or more and/or
- about 8, about 7, about 6, about 5, about 4 wt% or less of titanium nanoparticles, based on the total weight of the composition or the multifunctional coating.

In alternative embodiments, the coating composition/kit/multifunctional coating of the invention is free of titanium nanoparticles.

**d) Sepiolite**

As noted above, the coating composition/kit/multifunctional coating can comprise sepiolite.

Sepiolite, also known as meerschaum, is a soft clay mineral and a phyllosilicate. It is a complex magnesium

silicate. It is found in fibrous, fine-particulate, and solid forms. Sepiolite is opaque and off-white, grey or cream color, breaking with a conchoidal or fine earthy fracture, and occasionally fibrous in texture.

A typical chemical formula of sepiolite is $Mg_4Si_6O_{15}(OH)_2{\cdot}6H_2O$. However, the sepiolite may have a different degree of hydration (e.g. from 1 to 10 $H_2O$). Furthermore, the exact molar ratio for magnesium and silicon may also vary from the above formula.

It has been surprisingly found that sepiolite increases the foul-releasing efficacy of the coating. Furthermore, sepiolite confers an antibacterial effect to the coating. In addition, sepiolite increases the corrosion resistance coating. Finally, the sepiolite increases the strength of the coating.

In embodiments, the coating composition or the multifunctional coating of the invention comprises up to 15 wt% of the sepiolite, based on the total weight of the composition or the multifunctional coating. Similarly, in embodiments, the kit of the invention comprises the sepiolite in an amount such that the coating composition to be produced with the kit comprises up to 15 wt% of the sepiolite, based on the total weight of the composition.

In fact, in embodiments, the coating composition (of the invention or prepared using the kit of the invention) or the multifunctional coating comprises from about 1 to about 15 wt% of sepiolite, based on the total weight of the composition or the multifunctional coating. In embodiments, the coating composition or the multifunctional coating comprises:

- about 1, about 2, about 3, about 4, about 5, about 6, about 7, or about 8 wt% or more and/or
- about 15, about 12, about 10, about 9, about 8, about 7, or about 6 wt% or less of sepiolite, based on the total weight of the composition or the multifunctional coating.

In alternative embodiments, the coating composition/kit/multifunctional coating of the invention is free of sepiolite.

## Further Components

The coating composition, the kit, and the multifunctional coating of the invention can comprise further components. In particular, the coating composition/kit/multifunctional coating can comprise component that cause the coating to glow in the dark, which can ease the localization of the object bearing the coating in low-light conditions.

Non-limiting examples of components providing this "glow in the dark" feature include phosphorous, zinc sulfide, and strontium aluminate, and mixtures thereof, preferably a mixture of phosphorous, zinc sulfide, and strontium aluminate.

These "glow in the dark" components are typically present in small quantities in the coating. In embodiments, the coating composition or the multifunctional coating of the invention comprises up to 5 wt%, preferably about 1 wt%, of each of these "glow in the dark" components, based on the total weight of the composition or the multifunctional coating. Similarly, in embodiments, the kit of the invention comprises these components in an amount such that the coating composition to be produced with the kit comprises up to 5 wt%, preferably about 1 wt%, of each of these "glow in the dark" components, based on the total weight of the composition.

## Use, Coating System, Coated Substrate, and Method of Coating

As noted above, the present invention provides a coating composition as well as a kit for producing a coating composition. These coating compositions can be used to produce at least one coat of a multifunctional coating as defined above on a surface of a substrate. Further, there is also provided a coating system for coating a surface of a substrate, the coating system comprising at least one coat of a multifunctional coating as defined above as well as a coated substrate comprising a substrate wherein a surface of the substrate is coated with at least one coat of a multifunctional coating as defined above.

There is also provided a method of coating a surface of a substrate, according to appended claim 13.

The substrate to be coated may be of various nature, such as metal (e.g. steel), ceramic, fiberglass, carbon fiber, wood, and plastic.

Advantageously, the substrate (once coated) is for use in a wet environment. Such an environment is herein defined as an environment in which the substrate comes regularly in contact with water. Examples of substrates used in wet environment includes marine equipment, sensors for use in wet environments (e.g. sensors to track water parameters such as temperature, depth, salinity, dissolved gases, pH, and others in oceans, estuarine and coastal ecosystems, freshwater environments), automobile parts, agriculture equipment, aquiculture equipment, water-power generation equipment, and oil-gas industry equipment. More specific examples of marine equipment include boats, ships and vessels, in particular the hulls and ballasts thereof, buoys, fish traps, underwater equipment (including underwater robotic equipment), submarines, etc. Preferred substrates include marine equipment, preferably ship hulls, and sensors for use in wet environments.

Typically, the surface of the substrate to which the coating will be applied is prepared by cleaning, drying and abrading it. Indeed, first, the surface is cleaned so that it is free of contaminants such as grease, oil, wax, or mold. Of note, the surface is generally cleaned before it is sanded to avoid abrading the contaminant(s) into the surface. Secondly, the surface is dried, as much as possible as this promotes adhesion of the coating. Finally, especially in the case of hardwoods and non-porous surfaces, the surface is abraded, for example by sanding so that is become rough as this also promotes adhesion of the coating.

Prior art coatings for use in a wet environment, in particular those used for ship hulls, are typically applied in the manner shown in Figure 1. Indeed, Figure 1 shows the various layers of a typically prior art coating (10) for such use. First, a substrate (12), prepared as described above, is provided. Then, a primer coating (14) is applied, typically in one or two coats, on the substrate (12). Then, a tie coat (16) is applied, typically in one or two coats, on the primer coating (14). Finally, a functional topcoat (18) is applied is applied, typically in one to three coats, on the tie coat (16).

The primer coating (14) is typically an epoxy primer. It is applied to protect the surface of the substrate (12). Such primers are designed to prevent osmosis of the water into the surface of the substrate (12), particular for steel and fiberglass. It also provided some measure of protection against corrosion. Finally, it adds base strength in case the tie coating and the functional coating are damaged. Primer coatings are well-known in the art and commercially available. Non-limiting examples of primer coatings include Intershield® 300 sold by International®, Amercoat® 235 sold by PPG®, Recoatable Epoxy Primer sold by Sherwin Williams® and Jotamastic® 80 sold by Jotun®. Intershield® 300 is a pure epoxy coating sold for use as a universal primer. Amercoat® 235 is a two-component, multi-purpose phenalkamine epoxy. Recoatable Epoxy Primer by Sherwin Williams® is a catalyzed polyamide/bisphenol A epoxy primer designed for fast dry and quick or extended recoatability. Jotamastic® 80 is a two-component polyamine cured epoxy mastic coating that is a surface tolerant, high solids product.

The tie coat (16) is typically a tough and sandable single component paint. It contains resins with excellent adhesion characteristics for most painted surfaces. Its function is to guarantee adhesion of the functional coating (18) on the primer coating (14).

The function of the functional topcoat (18) of the prior art is to combat fouling. There are two types of technologies available. First, there are topcoats that prevent fouling matter (e.g. marine life) from depositing, attaching and/or growing. This is typically achieved via the release biocides in the water. Secondly, there are topcoats that release fouling that has deposited or attached itself and/or that has grown on the surface. This second type of coating is mostly used for ships as their movement in the water will polish away the fouling matter.

A non-limiting example of prior art coating is the Intersleek® 1100SR from International® (an Akzo Nobel® company). This coating is recognized as the best in market in foul release coating. It is marketed as a *"Patented fluoropolymer technology with enhanced slime release properties maintains performance throughout the docking cycle",* which is "Specically designed to tackle the problem of slime on vessel performance, this innovation in the Intersleek range delivers outstanding micro and macro fouling control with better static resistance even in warm waters." See Intersleek® 1100SR: Biocide-free, slime release fouling control coating, 2017, by International®, AzkoNobel®, incorporated herein by reference. The instructions provided with this product indicate that it "[m]ust be applied over approved primer system and Intersleek tiecoat (Intersleek 737 or 731)" or on top of another Intersleek coating system (which would also have a primer coating and a tie coat.

Figures 2A) and B) show the various layers of a coating for use in a wet environment according to an embodiment of the invention (20). First, a substrate (12), prepared as described above, is provided. Then, a primer coating (14) as defined above, is optionally applied, typically in one or two coats, preferably two coats, on the substrate (12). Indeed, in some embodiments, there is no primer coating, which is markedly different from prior art coatings. In other embodiments, a primer coating is present. In further contrast with the prior art coating shown in Figure 1, there is generally no tie coat. Rather, one or more coats (preferably two or more) of the coating composition of the invention are directly applied on the primer coating (14) or on the substrate (12) to form a multifunctional coating (22). The fact that the multifunctional coating (22) can be directly formed on the primer coating (14) is one of the advantages of the invention. This advantage is especially present when the multifunctional coating (22) and the primer coating (14) are of similar nature, for example if they comprise resins of the same family, e.g. when they both comprise an epoxy resin. The fact that the multifunctional coating (22) can also be directly formed on the substrate (12) is another of the advantages of the invention.

Therefore, in specific embodiments, in particular those in which a sensor for use in a wet environment is the substrate to be coated, the multifunctional coating is directly applied on the substrate (e.g. sensor) without intervening primer coating or tie coat, and preferably without any intervening layer at all.

The multifunctional coating (22) can be from about 1 $\mu$m to about 400 $\mu$m in thickness, preferably from about 100 $\mu$m to about 200 $\mu$m in thickness.

Typically, the multifunctional coating (22) is applied using a coating composition (of the invention or produced using the kit of the invention) in which the thermosetting resin is uncured (or only partially cured) and then allowing the thermosetting resin to cure. The coating composition can be applied to the substrate (12) by a variety of coating techniques, including simply painting the coating composition on the substrate (12).

## Advantages of the Invention

As noted above, the coating composition and kit of the invention allows for the production of multifunctional coatings for use in wet environments. More specifically, these multifunctional coatings are low-friction, foul-releasing, anticorrosion, mechanically-enhanced coatings.

Herein, a "low-friction" coating is a coating that has a coefficient of friction lower than the coefficient of friction of a similar coating comprising only the thermosetting resin system.

Herein, an "anticorrosion" coating is a coating that exhibits a higher corrosion resistance (e.g. a lower corrosion rate) than a similar coating comprising only the thermosetting resin. Corrosion resistance is defined as the propensity of a material to slow or prevent corrosion. Corrosion resistance of a metal can be measured, for example, using the method described in ASTM G50 - 10(2015), *"Standard Practice for Conducting Atmospheric Corrosion Tests on Metals"*.

Herein, an "foul-releasing" coating is a coating that ease detachment of fouling material from the substrate to which the coating is applied (compared to a similar coating comprising only the thermosetting resin system). In contrast, an "antifouling" coating is a that slows or prevents fouling of the substrate to which the coating is applied. The coatings of the invention are foul-releasing coatings. The degree of hydrophobicity of a coating can be typically indicative of its level of foul-release performance. For improved foul-release performances, a higher contact angle with water, and especially with ocean water, is preferred. The multifunctional coating of the invention is thus hydrophobic. The ATP concentration in biofilms grown in the coatings is also a measure of foul-releasing/anti-fouling efficacy, since the growth of a biofilm is a first step in the deposition of biofouling matter on a surface.

Herein, a "mechanically-enhanced" coating is a coating that has at least one mechanical property that is desirably enhanced compared to a similar coating comprising only the thermosetting resin system. The mechanical property can be stiffness, strength, wear resistance, indentation fracture resistance, and/or surface hardness. In comparison, the Intersleek® 1100SR from International® (an Akzo Nobel® company) is rather soft and " may suffer intercoat detachment in any areas that are subject to mechanical abrasion due to, eg. fendering or impact damage" - see Intersleek® 1100SR: Advanced Fluoropolymer Foul Release Coating, 2015, by International®, AzkoNobel®, incorporated herein by reference.

The multifunctional coatings are advantageous because they combine several functions.

In particular, the multifunctional coatings are both foul-releasing and anticorrosion. As such, in wet environments in which both biofouling and corrosion are big problems, the multifunctional coatings are particularly advantageous.

Of note, the multifunctional coatings combine both the antifouling activities of the prior art antifouling coatings. In other words, the multifunctional coatings both prevent fouling matter from depositing, attaching and/or growing and release fouling that has deposited or attached itself and/or that has grown on the surface. This is significant advantage compared to prior art antifouling coatings which typically exhibit only one of these activities. Indeed, the components of the coating (beside the thermoset) create a negative surface energy, which makes the surface difficult to attach to, and also provide a very smooth anti-adherent surface, which promotes fouling release.

The low-friction property of the multifunctional coatings is also advantageous in wet environments, and in particular, in applications in which the aero/hydrodynamic performance of the coated piece is of import. Indeed, in such cases, a lower coefficient of friction is desirable to achieve higher speeds, decrease fuel consumption, and achieve higher efficiency. The components of the coating (beside the thermoset) reduce the coefficient of friction of the coating and acting as solid lubricants.

The enhanced mechanical properties of the multifunctional coatings are also advantageous as they may extent of useful lifespan of the coating and may allow thin multifunctional coatings. In embodiments, the multifunctional coatings exhibit good resistance to shocks and damage caused e.g. by vibration.

The multifunctional coating also adheres well to different substrates.

In embodiments, the multifunctional coatings exhibit a tough and strong polymer matrix, a very smooth and slippery surface finish, a shiny and lightly glossy appearance, strong adhesion properties, large corrosion resistance and large foul-releasing properties and they are thin. In fact, compared with other resins comprising other composites additives, such as carbon fiber, graphite, calcium carbonate and others, the multifunctional coatings are clearly superior.

Finally, it should be noted that the fact that the multifunctional coating (22) can be directly applied on the primer or directly applied on the substrate (without intervening layer, e.g. tie coat) is another of the advantages of the invention.

## Various Definitions

The use of the terms "a" and *"an"* and *"the"* and similar referents in the context of describing the invention (especially in the context of the following claims) are to be construed to cover both the singular and the plural, unless otherwise indicated herein or clearly contradicted by context.

The terms *"comprising", "having", "including",* and *"containing"* are to be construed as open-ended terms (i.e., meaning "including, but not limited to") unless otherwise noted.

Recitation of ranges of values herein are merely intended to serve as a shorthand method of referring individually

to each separate value falling within the range, unless otherwise indicated herein, and each separate value is incorporated into the specification as if it were individually recited herein. All subsets of values within the ranges are also incorporated into the specification as if they were individually recited herein.

The use of any and all examples, or exemplary language (e.g., "such as") provided herein, is intended merely to better illuminate the invention and does not pose a limitation on the scope of the invention unless otherwise claimed.

No language in the specification should be construed as indicating any non-claimed element as essential to the practice of the invention.

Herein, the term "about" has its ordinary meaning. In embodiments, it may mean plus or minus 10% or plus or minus 5% of the numerical value qualified.

Unless otherwise defined, all technical and scientific terms used herein have the same meaning as commonly understood by one of ordinary skill in the art to which this invention belongs.

Other objects, advantages and features of the present invention will become more apparent upon reading of the following non-restrictive description of specific embodiments thereof, given by way of example only with reference to the accompanying drawings.

## DESCRIPTION OF ILLUSTRATIVE EMBODIMENTS

The present invention is illustrated in further details by the following non-limiting examples.

### Example 1 - Preparation of Coatings of the Invention and Comparative Coatings

Substrates made of 316 alloy stainless-steel were used. First, the substrates were sanded, cleaned, and dried. More specifically, the substrates were sanded with silicon sandpaper 70-100 grits. Then, the substrates were washed with acetone and left to dry for 1 hour at 30°C.

Then, a set of two coatings was applied to the substrate. This first coating applied was a primer coating. This primer coating was applied in two layers up to 5 mills (127 μm) thick (dry). Two primers were tested: Intershield® 300 sold by International® and Amercoat® 235 sold by PPG®. Intershield® 300 is a pure epoxy coating sold for use as a universal primer. Amercoat® 235 is a two-component, multi-purpose phenalkamine epoxy. The second coating, applied on top of the primer coating, varied in composition as described below. This top coating was applied in the number of layers needed to achieve a total dry coating thickness of up to 14 mils (355.6 μm). Both the primer and the top coatings were applied with an airless sprayer using up to 3000psi of pressure and gun spray tip sizes from 0.015-0.025".

The top coating was prepared using an aliphatic-bisphenol A epoxy resin. The top coating coatings comprised either no graphene nanoplatelets (GNP) or from 1 to 15 wt% of graphene nanoplatelets. The graphene nanoplatelets used were 2-30 nanometers thick (which means 4-60 layers), with flake size from 1-25 μm in size. Some of the top coatings tested also comprised one or more of the following:

- 10-1000 ppm of silver nanoparticles 10 nm nanometers in diameter;
- 2-20 wt% of copper (elemental, as a powder with particles of less than 100 μm in size);
- 0-6 wt% of titanium dioxide nanoparticles (rutile, 99.5%, 10-30 nm);
- 1-20 wt% of Sepiolite;
- 1-20 wt% of canola oil;
- phosphorous (P);
- zinc sulfide (ZnS); and
- strontium aluminate ($SrAl_2O_4$).

More specifically, the following coatings were produced.

### Coatings Produced

| Coating no. | GNP (wt%) | Oil (wt%) | Cu (wt%) | Ag (ppm) | $TiO_2$ (wt%) | Sepiolite (wt%) | P (wt%) | ZnS (wt%) | $SrAl_2O_4$ (wt%) |
|---|---|---|---|---|---|---|---|---|---|
| **1** | 1 | | | | | | | | |
| **2** | 2 | | | | | | | | |
| **3** | 3 | | | | | | | | |

(continued)

| Coating no. | GNP (wt%) | Oil (wt%) | Cu (wt%) | Ag (ppm) | $TiO_2$ (wt%) | Sepiolite (wt%) | P (wt%) | ZnS (wt%) | $SrAl_2O_4$ (wt%) |
|---|---|---|---|---|---|---|---|---|---|
| **4** | 4 | | | | | | | | |
| **5** | 5 | | | | | | | | |
| **6** | 6 | | | | | | | | |
| **7** | 7 | | | | | | | | |
| **8** | 8 | | | | | | | | |
| **9** | 9 | | | | | | | | |
| **10** | 10 | | | | | | | | |
| **11** | 15 | | | | | | | | |
| **12** | 0.0 | | | | | | | | |
| **13** | 0.3 | | | | | | | | |
| **14** | 0.3 | 4 | | | | | | | |
| **15** | 0.3 | 4 | 20 | | | | | | |
| **16** | 0.3 | 4 | | 500 | | | | | |
| **17** | 0.3 | | | 500 | | | | | |
| **18** | 0.3 | | 20 | | | | | | |
| **19** | 0.3 | | | | 6 | | | | |
| **20** | 0.3 | | | | | 7 | | | |
| **21** | 0.3 | 4 | 20 | 500 | | | | | |
| **22** | 0.3 | 4 | 20 | 500 | | 7 | | | |
| **23** | 0.3 | 4 | 20 | 500 | 6 | 7 | | | |
| **24** | 0.3 | | | | | | 1 | 1 | 1 |
| **25** | 0.3 | | 2 | | | | | | |
| **26** | 0.3 | | 5 | | | | | | |
| **27** | 0.3 | | 10 | | | | | | |
| **28** | 0.3 | | 15 | | | | | | |
| **29** | 0.3 | | 20 | | | | | | |
| **30** | 0.3 | | | | 2 | | | | |
| **31** | 0.3 | | | | 4 | | | | |
| **32** | 0.3 | | | | 6 | | | | |
| **33** | 0.3 | | | | | 1 | | | |
| **34** | 0.3 | | | | | 5 | | | |
| **35** | 0.3 | | | | | 7 | | | |
| **36** | 0.3 | | | | | 10 | | | |
| **37** | 0.3 | | | | | 15 | | | |
| **38** | 0.3 | | | | | 25 | | | |
| **39** | 0.3 | 1 | | | | | | | |
| **40** | 0.3 | 2 | | | | | | | |

(continued)

| Coating no. | GNP (wt%) | Oil (wt%) | Cu (wt%) | Ag (ppm) | $TiO_2$ (wt%) | Sepiolite (wt%) | P (wt%) | ZnS (wt%) | $SrAl_2O_4$ (wt%) |
|---|---|---|---|---|---|---|---|---|---|
| **41** | 0.3 | 3 | | | | | | | |
| **42** | 0.3 | 5 | | | | | | | |
| **43** | 0.3 | 10 | | | | | | | |
| **44** | 0.3 | 15 | | | | | | | |
| **45** | 0.3 | 20 | | | | | | | |
| **46** | 0.3 | | | 100 | | | | | |
| **47** | 0.3 | | | 200 | | | | | |
| **48** | 0.3 | | | 300 | | | | | |
| **49** | 0.3 | | | 400 | | | | | |
| **50** | 0.3 | | | 500 | | | | | |
| **51** | 0.3 | | | 600 | | | | | |
| **52** | 0.3 | | | 700 | | | | | |
| **53** | 0.3 | | | 800 | | | | | |
| **54** | 0.3 | | | 900 | | | | | |
| **55** | 0.3 | | | 1000 | | | | | |

**Example 2 - Fouling Testing**

To determine the performances against fouling of the coatings, coated samples were exposed to fresh salt water with a medium temperature of 18°C for up to 5 months. The samples were analyzed by macrophotography's every two weeks. Fouling extend was determined visually and rated Poor, Average, Good, or Excellent. Figure 3 shows a coating with excellent, good, average and poor efficacy.

**Efficacy Against Fouling**

| Coating no. | Efficacy | Coating no. | Efficacy |
|---|---|---|---|
| **1** | Average | **17** | Excellent |
| **2** | Average | **18** | Excellent |
| **3** | Average | **19** | Excellent |
| **4** | Average | **20** | Excellent |
| **5** | Average | **21** | Excellent |
| **6** | Average | **22** | Excellent |
| **7** | Average | **23** | Excellent |
| **8** | Average | **24** | Good |
| **9** | Average | **39** | Excellent |
| **10** | Average | **40** | Good |
| **11** | Poor | **41** | Good |
| **12** | Poor | **42** | Excellent |
| **13** | Good | **43** | Good |
| **14** | Excellent | **44** | Good |
| **15** | Excellent | **45** | Good |
| **16** | Excellent | | |

As an example, Figure 4 shows the degree of fouling of some samples after an exposure of 5 months. The first sample on the left side is a blank stainless-steel control sample. The next three (3) substrates (from left to right) bore a coating of International® Micron 99, a coating sold commercially by AkzoNobel® and described as delivering "Premium SPC [Self Polishing Copolymer] Antifouling for Multi-Season Protection", which was applied as per the manufacturer's instructions. The next sample corresponds to coating no. 15. The two (2) samples on the right bore coating no. 13. It can be seen in Figure 4, that the International® Micron 99 coating had only average efficacy.

Comparing coatings no. 1 to 13 (varying wt% of GNP), coating no. 13 comprising 0.3 wt% of GNP showed the highest efficacy.

Comparing coatings no. 14 and 39 to 45 (varying wt% of canola oil), coating no. 42 comprising 5 wt% of oil showed the highest efficacy.

**Example 3 - Corrosion Testing**

The anticorrosion performances of the coatings were tested, according to ASTM G50 - 10(2015), following the procedure below.

First, after the coating finished curing, the samples were cleaned using acetone and cotton rug. Then, the sample size and weight was measured. Each sample was then put in contact with a 3.5%NaCl (corrosive) solution for 1000 hours. The NaCl solution was replaced every 6 days for the duration. The samples were removed from the solution and cleaned again as described above. Then, the corroded part of the sample was removed using HCl and the weight of the samples were stabilized. The corrosion rate (in mm/year) is finally calculated using the following equation:

$$\frac{K\,W}{A\,T\,D}$$

in which K is the corrosion rate, W is the mass loss in grams, A is the surface area of the sample (0.01 $cm^2$), T is the exposure time, and D is the density in $g/cm^3$.

Further, the corrosion current density (in $\mu A/cm^2$) was calculated using Tafel Slope Analysis.

The results are summarized in the table below.

**Corrosion measurements**

| Coating no. | GNP content (wt%) | Oil (wt%) | Corrosion rate (mm/year) | Icorr $\mu A/cm^2$ |
|---|---|---|---|---|
| **1** | 1 | 0 | 1.2 | 0.69 |
| **2** | 2 | 0 | 1.1 | 0.63 |
| **3** | 3 | 0 | 1 | 0.57 |
| **4** | 4 | 0 | 0.93 | 0.43 |
| **5** | 5 | 0 | 0.9 | 0.34 |
| **6** | 6 | 0 | 0.43 | 0.24 |
| **7** | 7 | 0 | 0.25 | 0.14 |
| **8** | 8 | 0 | 0.012 | 0.098 |
| **9** | 9 | 0 | 0.564 | 0.27 |
| **10** | 10 | 0 | 0.543 | 0.28 |
| **11** | 15 | 0 | 0.654 | 0.35 |
| **12** | 0 | 0 | 1.3 | 0.75 |
| **13** | 0.3 | 0 | 0.09 | 0.051 |
| **14** | 0.3 | 4 | 0.59 | 0.45 |
| **39** | 0.3 | 1 | 0.07 | 0.056 |
| **40** | 0.3 | 2 | 0.09 | 0.05 |
| **41** | 0.3 | 3 | 0.045 | 0.031 |
| **42** | 0.3 | 5 | 0.001 | 0.076 |
| **43** | 0.3 | 10 | 0.009 | 0.052 |
| **44** | 0.3 | 15 | 0.12 | 0.09 |

(continued)

| Coating no. | GNP content (wt%) | Oil (wt%) | Corrosion rate (mm/year) | Icorr μA/cm$^2$ |
|---|---|---|---|---|
| **45** | 0.3 | 20 | 0.14 | 0.1 |

The addition of GNP increased the corrosion protection of epoxy-based materials. For instance, the presence of 8 wt% GNP increased the corrosion resistance by a factor of about 20. In fact, among Coatings nos. 1 to 13, Coating no. 8 exhibited the maximum corrosion resistance.

Comparing coatings no. 14 and 39 to 45 (varying wt% of canola oil), coating no. 42 comprising 5 wt% of oil showed the lowest corrosion rate and one of the lowes Icorr.

**Example 4 - Microstructure of the Coatings**

The microstructure of the coatings was analyzed using a scanning electron microscope SEM (Model S-4700, Hitachi High Technologies, Inc., Tokyo, Japan) to show how well the various components of the coating were dispersed in the coating. Indeed, observing the surface of the coating using a 500x objective, it was possible to observe the dispersion of the GMP at the micron level.

We observed that the GNPs showed various degrees of dispersion in the coating. For example, Figure 5 a) shows a coating with well-dispersed GNPs, while Figure 5 b) shows a coating with not well dispersion GNPs.

We note that, among coatings no. 1 to 13, Coating no. 13 exhibited the best GNP dispersion when observed by scanning electron microscope. The results are reported in the table below.

**Dispersion in the Coating**

| Coating no. | Dispersion | Coating no. | Dispersion |
|---|---|---|---|
| **1** | Well dispersed | **12** | No GNPs |
| **2** | Well dispersed | **13** | Very well dispersed |
| **3** | Well dispersed | **14** | Very well dispersed |
| **4** | Well dispersed | **39** | Very well dispersed |
| **5** | Well dispersed | **40** | Very well dispersed |
| **6** | Transition to not well dispersed | **41** | Very well dispersed |
| **7** | Not well dispersed | **42** | Very well dispersed |
| **8** | Not well dispersed | **43** | Very well dispersed |
| **9** | Not well dispersed | **44** | Very well dispersed |
| **10** | Not well dispersed | **45** | Very well dispersed |
| **11** | Not well dispersed | | |

**Example 6 - Coefficient of friction**

The coefficient of friction of the coating was determiner using a Universal Micro Tribometer (UMT) following ASTM D7027-13. This test used a diamond indenter sliding in linear motion on the surface of the coating in a single pass of 5 mm with a speed of 0.166mm/s at room temperature and under a relative humidity of 40-50%. In this sliding test, a load (1, 5, 10, or 30N) is applied downward against the surface on the coating with a Rockwell diamond indenter tip with a radius of 200 μm to generate scratch tracks. The coefficient of friction (μ)was then calculated, from the depth of the indenter versus the applied force on each point, using the software provided with the apparatus.

Epoxy resins typically have high coefficients of friction. In some embodiments, the coatings of the invention have typically reduced coefficients of friction. For example, the coefficient of friction (μ) desirably decreased from 0.07 for the epoxy resin alone (Coating no. 12, Figure 6) to 0.009 for coating no. 14 (Figure 7).

The coefficient of friction measured were as follows:

**Coefficients of friction (μ)**

| Coating no. | μ | Coating no. | μ | Coating no. | μ |
|---|---|---|---|---|---|
| **1** | 0.05 | **13** | 0.09 | **39** | 0.009 |
| **2** | 0.05 | **14** | 0.009 | **40** | 0.009 |
| **3** | 0.04 | **15** | 0.009 | **41** | 0.009 |
| **4** | 0.01 | **16** | 0.009 | **42** | 0.003 |
| **5** | 0.009 | **17** | 0.06 | **43** | 0.005 |
| **6** | 0.01 | **18** | 0.06 | **44** | 0.009 |
| **7** | 0.08 | **19** | 0.06 | **45** | 0.009 |
| **8** | 0.09 | **20** | 0.07 | | |
| **9** | 0.09 | **21** | 0.009 | | |
| **10** | 0.09 | **22** | 0.009 | | |
| **11** | 0.09 | **23** | 0.009 | | |
| **12** | 0.09 | **24** | 0.03 | | |

We note that, among Coatings nos. 1 to 13, Coatings no. 13 exhibited the lowest coefficient of friction.
Comparing Coatings nos. 12, 13 and 14, we note that Coating no. 14 exhibited the lowest coefficient of friction.
Comparing Coatings nos. 14 and 39 to 45 (with 1 to 20 wt% oil), we note that Coating no. 42 (5 wt% oil) exhibited the lowest coefficient of friction.

**Example 7 - Mechanical Properties of the Coatings**

The mechanical tests of the coatings were measured in the following matter:

**Fracture Toughness ($K_{IC}$)**

The fracture toughness $K_{IC}$ was measured according to ASTM D 5045-99. A loading rate of 10 mm/min was used in all the tests, and the load values and the load-point displacements in the test process were recorded automatically. The test used a steel indenter and resulted in surface cracks, which were recorded by the apparatus within the milliseconds range. Then, the results were provided by the data acquisition system.

**Young Modulus**

The Young's modulus was measured according to ASTM D 638-08. The testing apparatus was a type CMT5504 material testing machine made by MTS systems® Co., Ltd. (China) and LVDT transducers were set at both sides of the specimen to obtain the change of gauge length. A 5 mm/min loading speed was selected for the test.

**Flexural Strength**

The mechanical three-point flexural test was performed using an in-house system. A load cell of 5 kN was used, the distance between the two fixed points of support was 50 mm, and the speed was 2.00 mm/min. The six rectangular-shaped specimens were 80±2 mm long, 10±2 mm length and 4±2 mm thick, and they were used in accordance with the ISO 178:1993(E) standard. The loading was performed by a third mobile support positioned at an average distance of 40 mm from the rectangular specimen. The flexural strength determination using the following equation:

$$\sigma = \frac{3FL}{2bd^2}$$

in which σ is the flexural strength (in MPa), F is the rupture load (in N), L is the support span (in m), b is the width of specimen (in m) and d is the thickness of specimen (in m).
The results of the mechanical properties testing are summarized in the table below.

**Mechanical properties**

| Coating no | GNP content (wt%) | Oil (wt%) | Tensile strength (MPa) | $K_{IC}$(MPa m$^{1/2}$) | Flexural strength (MPa) |
|---|---|---|---|---|---|
| **1** | 1 | 0 | 77.03 | 3.61 | 47.49 |
| **2** | 2 | 0 | 78.21 | 3.83 | 47.84 |
| **3** | 3 | 0 | 78.99 | 3.84 | 48.48 |
| **4** | 4 | 0 | 79.09 | 3.95 | 50 |
| **5** | 5 | 0 | 80.51 | 5.34 | 52.691 |
| **6** | 6 | 0 | 82.71 | 6.67 | 54.606 |
| **7** | 7 | 0 | 80.54 | 4.56 | 56.521 |
| **8** | 8 | 0 | 79.52 | 4.53 | 58.436 |
| **9** | 9 | 0 | 78.32 | 3.98 | 60.351 |
| **10** | 10 | 0 | 78.17 | 3.65 | 58.21 |
| **12** | 0 | 0 | 62.92 | 3.07 | 40.92 |
| **13** | 0.3 | 0 | 82.73 | 6.31 | 55.87 |
| **14** | 0.3 | 4 | 80.54 | 6.64 | 51.97 |
| **39** | 0.3 | 1 | 87.12 | 5.37 | 59.63 |
| **40** | 0.3 | 2 | 79.61 | 5.92 | 51.39 |
| **41** | 0.3 | 3 | 84.86 | 7.11 | 60.12 |
| **42** | 0.3 | 5 | 85.21 | 5.16 | 62.57 |
| **43** | 0.3 | 10 | 79.13 | 5.32 | 55.32 |
| **44** | 0.3 | 15 | 75.87 | 4.35 | 48.97 |
| **45** | 0.3 | 20 | 78.12 | 5.67 | 49.99 |

We note a general and significant increase in fracture toughness K(ic), tensile strength and flexural strength when the GNP content increases. The GNP content for maximum tensile strength and fracture toughness was found to be 6%. The GNP content for maximum flexural strength was 9%.

**Example 8** - **Glow in the Dark**

Coating no. 24, containing phosphorus, ZnS and $SrAl_2O_4$, was found to glow in the dark. This demonstrates the possibility of producing coatings with this feature.

**Example 9** - **Tailoring the GNP Content to Modulate a Coating Property**

As reported above, we measured the graphene distribution, tensile strength, indentation fracture resistance, flexural strength, coefficient of friction, foul-releasing performances, and/or corrosion resistance of the coatings of Example 1 in the manner described in Examples 2 to 7.

Coatings no. 1 to 13 allowed studying the influence of GNP concentration on coating performances. We found that, among coatings no. 1 to 13:

- coating no. 13 (comprising 0.3 wt% GNP) exhibited the best graphene distribution and the maximum coefficient of friction;
- coating no. 5 (comprising 5 wt% GNP) exhibited the maximum foul-releasing efficacy;
- coating no. 6 (comprising 6 wt% GNP) exhibited the maximum tensile strength and the maximum indentation fracture resistance;
- coating no. 8 (comprising 8 wt% GNP) exhibited the maximum corrosion resistance;
- coating no. 9 (comprising 9 wt% GNP) exhibited the maximum flexural strength.

Hence, the GNP content of the coating can be altered as needed to achieve a coating in one or the other of the above properties is enhanced or suppressed.

**Example 10 - Coating Adhesion**

We tested the adhesion of a coating of the invention according to ASTM D3359-17 (Standard Test Methods for Rating Adhesion by Tape Test). This test method is a procedure for assessing the adhesion of relatively ductile coating films to metallic substrates by applying and removing pressure-sensitive tape over cuts made in the film.

Sandblasted steel plates were coated with one layer of Intershield 300 primer and one layer of the coating of the invention. The primer was allowed to dry for different periods of time on different samples before the coating of the invention was applied: 3hr (touch dry), 5hr, 7hr, 9hr, and 1 day. In addition, one steel plates bore no primer at all and was only coated with the coating of the invention. After the coating of the invention was allowed to dry overnight, the entire coating system was tested using the tape test.

The coatings tested were coatings nos.1 to 24 as described in Example 1.

The total thickness of the coating systems on the steel plates was about 325 μm, thus the test type A specified in ASTM D3359-17 was performed. Under Test Method A, an X-cut is made through the film to the substrate, and pressure-sensitive tape is applied over the cut and then removed. The test result is passed or failed. All coatings tested passed the test.

Figure 8 shows a coating of the invention after 3-hour drying time a) before and b) after (bottom) the tape test. Figure 9 shows a coating of the invention after 5-hour drying time a) before and b) after (bottom) the tape test. Figure 10 shows a coating of the invention after 7-hour drying time a) before and b) after (bottom) the tape test. Figure 11 shows a coating of the invention after 9-hour drying time a) before and b) after (bottom) the tape test. Figure 12 shows a coating of the invention after 24-hour drying time a) before and b) after (bottom) the tape test. Figure 13 shows a coating of the invention without underlying primer a) before and b) after (bottom) the tape test. In all cases, there was no noticeable peeling or flaking of the coating after the tape was removed. (in Figures 12 and 13, some particles of tape glue remained behind on the sample.)

Test type B (typically no considered suitable for films thicker than 125μm) was also attempted. Under Test Method B, the general objective is the same, except the cut through the film to the substrate is in the form of a lattice pattern, with either six or eleven cuts in each direction. Similar to Test Method A, pressure-sensitive tape is applied over the lattice pattern and then removed. In this test, the cutting of the grid resulted in rectangles of coating flaking off the sample (without any need for applying/removing the tape), as shown in Figure 14. We nevertheless observed that the grid cutting exposed the substrate metal directly. Hence, we conclude that the coating of the invention seems to have bonded very strongly to the epoxy-based primer, but the primer seemed to adhere less to the steel plate.

**Example 11 - Coating Stability**

We exposed test samples coated with coatings nos.1 to 24 as described in Example 1 an aqueous solution of 3.5 wt% NaCl water for 3 months. We observed that the coating thickness did not change, showing that the coatings were stable and did not degrade over time. In other words, the components of the coatings did not leach in the environment.

**Example 12 - Flume Tank Evaluation**

This experiment was conducted from March 1-2, 2018 at the Fisheries and Marine Institute, St. John's, NL, Canada. The purpose was to evaluate the drag induced on an aluminum plate by coatings of the invention. In fact, three different coatings of the invention (nos. 13, 14, and 23 as described in Example 1) were investigated, as well as a sandblasted aluminum plate for comparison ("sandblasted control plate").

Below, we report the result of a comparative experiment carried out in the Marine Institute flume tank in order to measure the hydrodynamic performance of coatings of the invention.

**Method**

Test Setup

The test setup, shown in Figure 15 (arrows indicate the water flow direction), involved holding the coated plates in a horizontal position, submerged beneath the flume tank's service carriage, which was positioned above the water surface of the flume tank. The horizontal plates, 1.2m × 2.4m in size, were supported by a rigid frame. The rigid frame was the supporting structure for low friction bearings which would allow the plate to slide longitudinally as the water speed and resulting drag shifted the plates downstream by minute distances. The forward edge of the test plate had 2

holes drilled in the corners. These 2 holes were the connection points for a 1mm diameter PVC coated Kevlar bridle with 1.2m legs. This V-bridle was connected to a second 6m long single bridle which connected the plate to a miniature S-type load cell located at the mouth of the tank. The load cell was attached to the towing mast and had a measurement range of 11.4 kgf (25 lbf). While the range of the load cell was well beyond the anticipated range to be measured, a gain was applied to effectively provide accurate measurement results while minimizing the possibility of damage to the load cell due to shock loads during test setup which could possibly occur from a substantially heavier test plate.

The experimental design involved testing 2 plates in 2 separate test frames simultaneously. In this manner, direct comparisons could be made between the 2 coated plates. To minimize any errors due to test frame effects, the intention was to run each plate in each test frame at least once, at the full range of speeds to be tested. For the range of speeds tested for the plate size evaluated, the Reynolds number ranged from $1.2 \times 10^6$- $2.78 \times 10^6$

Given that the typical Froude number of large commercial vessels is approximately 0.15 to 0.35, this experiment is conducted at the range of 0.106 ~ 0.237, which is near the operation region.

Initial design

The initial design supported the plate with 12 stud-mounted all-position ball transfer bearings; 6 bearings on the underside of the plate, and 6 bearings on the upper-side of the plate. The bearings on the upper-side of the plate were meant to limit vertical movement of the plate in the event of a hydrodynamic lift force which could be present at higher test speeds. Four smaller bearings positioned to the left and right of the plate edges limited movement of the plate in the event of the plate shifting laterally during trials.

The initial design of the test apparatus made certain assumptions based on preliminary load data suggested by outputs from computational fluid dynamics software (Ansys Fluent®). The assumption was that loads encountered would be significantly higher for a plate of a smaller size than the size tested during flume tank trials (2 $m^2$ versus 2.97 $m^2$). Preliminary measurements taken during the first day of testing in the flume tank, on February 28, 2018, suggested that those predictions were significantly greater than the actual forces measured during flume tank trials. As a result, the original test apparatus proved inadequate in generating repeatable and/or accurate test results. It was widely felt that the issue with this first novel design was related to excess friction in the bearings supporting the horizontally installed 4.8mm (3/16") aluminum plate(s). As a result, modifications to the test frames were undertaken after the first day of testing.

Revised design

The revised design focused on reducing the friction of bearings. A more traditional deep groove ball bearing type was adapted, using 608z bearings, which have an outer diameter of 22mm, a bore of 8mm and a bearing width of 7mm. These bearings were substituted for the bearings in the original design and provided reduced friction, resulting in an improved freely rotating supporting surface.

A secondary adjustment was made to the test setup before tests commenced on March 2, 2018. This involved recalibrating the load cells to a lower maximum range, as suggested by data outputs from the initial design evaluations.

A revision to the test process was also implemented with the revised design. Testing with the initial design suggested that increasing speed from a low to a high value did not provide linear results when plotted against the square of the speed. Initiating testing with a higher speed and following with incrementally reduced speeds greatly improved the linearity of the data. As drag is theoretically linear with speed squared, this was the chosen method of speed application. It is suggested that this finding was mainly due to frictional hysteresis of the bearings and not the more commonly defined hysteresis present in load cells.

This modified design proved to be of superior design to the initial design, as evidenced by improved threshold velocities detected during testing. The threshold velocity is the velocity at which useful data can be collected from the load measuring device as speed is increased from 0 m/s. The lower threshold velocity indicates an improvement to the test apparatus and/or the measuring device.

**Results**

Drag Determination - Speed Induced

After further pre-tests were completed with the revised design test apparatus, a decision was made to limit testing to only 1 of the 2 test frames. A lack of comparable data between the 2 frames only served to cloud the interpretation of test results. The "starboard frame" was the frame selected as the best option of the two, although tests completed prior to that decision using both frames simultaneously were quite helpful in determining some of the issues which initially plagued the experiment.

The results can be seen graphically in Figure 16 and the summarized test data can be found in table below.

<table>
<tr><th rowspan="2">Mesured Speed (m/s)</th><th rowspan="2">Speed Squared (m/s)</th><th colspan="5">Drag (grams</th></tr>
<tr><th>Coating no. 14 run 1</th><th>Coating no. 14 run 2</th><th>Sandblasted run 3</th><th>Coating no. 13 run 4</th><th>Coating no. 23 run 5</th></tr>
<tr><td>1.16</td><td>1.35</td><td>1972</td><td>1952</td><td>1863</td><td>1861</td><td>1849</td></tr>
<tr><td>1.04</td><td>1.08</td><td>1665</td><td>1675</td><td>1739</td><td>1705</td><td>1784</td></tr>
<tr><td>0.91</td><td>0.83</td><td>1404</td><td>1439</td><td>1504</td><td>1560</td><td>1724</td></tr>
<tr><td>0.78</td><td>0.61</td><td>1138</td><td>1153</td><td>1190</td><td>1460</td><td>1538</td></tr>
<tr><td>0.65</td><td>0.43</td><td>914</td><td>938</td><td>1014</td><td>1250</td><td>1422</td></tr>
<tr><td>0.52</td><td>0.27</td><td>716</td><td>754</td><td>903</td><td>*803</td><td>1354</td></tr>
<tr><td colspan="3">Speed at bearings is which static exceeded by friction of plate friction</td><td>(m/s) moved @ 0.72</td><td>(m/s) moved @ 0.52</td><td>(m/s) moved @ 0.39</td><td>(m/s) moved @ 0.78</td></tr>
<tr><td colspan="7">*Outlier omitted from plotted data</td></tr>
</table>

For speeds below 1.04 m/s, the coating no. 14 test plate had the lowest drag, followed by the sandblasted control plate, the coating no. 13 plate and finally the coating no. 23 test plate. For speeds above 1.04 m/s, the results differ. Results suggest there is a change in the flow phase above this test speed, although the Reynolds number is indicative of turbulent flow for all speeds tested.

The plates having the lowest slope in Figure 16 have the lowest coefficient of drag. Extrapolating for speeds above 1.16 m/s suggests that the coefficient of drag of the coating no. 23 plate is the lowest, followed by the coating no. 13 coated plate, the sandblasted plate and finally the coating no. 14 coated plate.

Drag Determination - Overcoming Static Bearing Friction

A second method of comparing drag between plates was evaluated. It involved determining the water speed at which the plate drag overcomes the inherent static friction of the supporting bearings. Test plates were connected to the load cell with no significant load being transmitted to the upstream tow point. Increases in water speed were applied in increments of 0.065 m/s and the corresponding speed at which the plate friction exceeded the static friction of the supporting bearings was noted (i.e. drag values at the load cell increased). The recorded speeds are shown in the bottom row of table in the preceding section. The data suggests that the drag of the coating no. 23 test plate was lowest, followed by the coating no. 14 test plate, then the Sandblasted control plate, followed by the coating no. 13 plate.

Friction Coefficient

The friction coefficient was calculated and compared with ITTC-1957 Line friction coefficient in Figure 17. ITTC is the International Towing Tank Conference, an association that issues recommended procedures and guidelines for the prediction of the hydrodynamic performance of ships and marine installations based on the results of physical and numerical experiments.

Results show that coating no. 23 has lower resistance value and coating no. 13 is 9.2% higher than ITTC friction coefficient. Coating no. 14 is higher than the sandblasted sample, which is unexpected.

**Example 16** - **Industrial Coating Application and Dispersion**

Successful application of the coatings using standard industrial airless spraying machines were performed. Furthermore, dispersion analysis was made in order to observe the degree of dispersion obtained using field environment. For the spraying performance test, pressures from 1000-2500 psi were used and tip nozzle between 0.023 -0.031" were used. The degree of dispersion is observed by scanning electron microscope (Figure 18 in the "bright flakes" represent the graphene nanoplatelets, while the dark phase represents the resin) and results of coating surface quality can be observed in Figure 19.

Coating no. 14 as described in Example 1 was used for this experiment.

**Example 17 - Surface Quality**

Overall surface characterization showed that coating no. 14 had the best overall smoothness. This can be observed by the shininess of the overall surface. Surface quality is not only characterized by this aesthetic factor, but also by the low friction performance under the towing tank - see Example 12.

**Example 18 - Wetting Test**

The wetting of the coating of the invention was measured according to ASTM D7490-13. Static contact angles were measured using 10μl of deionized water (DI) or salty ocean water on a sample bearing coating no.14 with a coating thickness of ~119μm and a sample bearing the Intersleek® 1100SR coating from International Paint®.
The contact angle is the angle formed between the solid/liquid interface and liquid/vapor interface.
We produced three (3) separate drops of DI water or ocean salty water on the surface and measured the contact angle for each drop, which resulted in a total of six angle measurements, which were captured within ten (10) seconds using a digital microscope. The static contact angles were measured using the OnScreenProjector® software from two-dimensionally the angle formed. For asymmetric drops (measurements on both side of the drop more than 2° apart), the results were discarded and the test was repeated with a new drop. All experiments were carried out under standard room temperature (about 23°C) and relative humidity ≤50%.
The result can be found in the table below.

**Wetting Angles**

| Coating no | GNP content (wt%) | Oil (wt%) | Ocean Water (°) | DI Water |
|---|---|---|---|---|
| **12** | 0 | 0 | 62 | 64 |
| **13** | 0.3 | 0 | 134 | 141 |
| **Coating no** | **GNP content (wt%)** | **Oil (wt%)** | **Ocean Water (°)** | **DI Water (°)** |
| **14** | 0.3 | 4 | 136 | 144 |
| **39** | 0.3 | 1 | 124 | 131 |
| **40** | 0.3 | 2 | 127 | 132 |
| **41** | 0.3 | 3 | 132 | 145 |
| **42** | 0.3 | 5 | 138 | 147 |
| **43** | 0.3 | 10 | 129 | 135 |
| **44** | 0.3 | 15 | 119 | 134 |
| **45** | 0.3 | 20 | 115 | 129 |

Figure 20 shows the deionized water contact angles measured for coating nos. 1 to 16 (as described in Example 1). Coating no.42 showed the highest contact angle.
Figure 21 shows the deionized water and ocean water contact angles measured for coating no. 14 (as described in Example 1) and the Intersleek 1100SR coating. It can be seen on this figure that coating no. 14 shows a larger contact angle than the Intersleek® 1100SR coating for deionized water (144° vs 135°) and a much larger contact angle for ocean water (136° vs 101°).

**Example 19 - Biofilm Growth**

Biofilm growth was tested according to ASTM E2562-17.
More specifically, the CDC Biofilm Reactor (BioSurface® Technologies, Bozeman, MT, USA) was used in exsitu bench-scale experiments. The 1-L glass vessel provided a volume capacity of approximately 350-mL and a polypropylene insert supported eight removable rods which could each hold three 1.27-cm diameter, 0.3-cm thick coupons; assembled reactors can be seen in Figure 22 (A: coupons and B: reactor).
Ocean water was continuously transported into the reactor using a peristaltic pump and PharMed BPT tubing (Cole Parmer, Montreal, CA). Coupons used with the CDC reactor were made of carbon steel and were either left uncoated as controls or coated with one of the following coatings: Intersleek® 1100SR, coatings nos. 1 to 14 and 39 to 45.
ATP concentrations in biofilms from the surfaces of blank coupons increased with testing time (which was 3

months). The results are shown in Figure 23. ATP concentrations were lowest on samples coated using the coating of the invention. Coatings nos. 13, 14 and 39 to 45 showed ATP concentrations lower than that obtained with Intersleek® SR. The average lowest ATP biofilm was for coating no.41.

**Example 20 - Field Test**

Coating no.14 was applied using paint brushes and rollers to the hull of a 42 ft yacht. A dry film thickness (DFT) of 250$\mu$m was obtained. Figure 24A) and B) shows the hull being coated and the coated hull, respectively.

Successfully prevention of marine organisms for 6 months was obtained when tested in the Atlantic Ocean with a median temperature of 17°C (15-20°C). Furthermore, a direct 3% reduction in friction and improvement in fuel consumption was observed.

**Example 21 - Coatings without Primer Coat**

We tested coating no. 42 by itself without primer, i.e. coated directly, on a substrate made of 316 alloy stainless-steel. The coating exhibited good adhesion, foul release performance, and corrosion performance when tested according the protocols reported in the above Examples.

The coating had the same adhesion and foul-release performances as that of coating no. 42 (with prime) discussed above. The only meaningful difference a lower corrosion resistance - see the table below.

| Coating no. | GNP content (wt%) | Oil (wt%) | Corrosion rate (mm/year) | Icorr $\mu$A/cm$^2$ |
|---|---|---|---|---|
| **42 (without primer)** | 0.3 | 5 | 0.005 | 0.098 |

The scope of the claims should not be limited by the preferred embodiments set forth in the examples, but should be given the broadest interpretation consistent with the description as a whole.

**REFERENCES**

The present description refers to a number of documents, the content of which is herein incorporated by reference in their entirety. These documents include, but are not limited to, the following:


- Ganslaw, Coating Innovations - The demand for conductive coatings in electronic devise continues to grow, Adhesives & Sealants Industry (ASI Magazine), March 1, 2012, 22-23,
- La et al., Improved and A Simple Approach for Mass Production of Graphene Nanoplatelets Material, ChemistrySelect, 2016, 5, 949 -952,
- Lindholdt et al., Effects of biofouling development on drag forces of hull coatings for ocean-going ships: a review. J Coat Technol Res, 2015, 12:415-444
- Liu et al., Corrosion Resistance of Graphene-reinforced Waterborne Epoxy Coatings, Journal of Materials Science & Technology, May 2016, Volume 32, Issue 5, 425-431,
- Monetta et al., The Effect of Graphene on the Protective Properties of Water-Based Epoxy Coatings on Al2024-T3, International Journal of Corrosion, 2017, Volume 2017, Article ID 1541267, pages 1-9,
- Zhang et al., Mechanical and Anticorrosive Properties of Graphene/Epoxy Resin Composites Coating Prepared by in-Situ Method, Int. J. Mol. Sci. 2015, 16, 2239-2251,
- American patent application no. US 2010/0330025 A1,
- American patent application no. US 2015/0152270 A1,
- American patent application no. US 2017/0037257 A1,
- American patent application no. US 2017/0260401 A1,

- Chinese patent application no. CN 103820055 A,
- Chinese patent application no. CN 104559669 A,
- Chinese patent application no. CN 104974640 A,
- Chinese patent application no. CN 105385318 A,
- Chinese patent application no. CN 105949946 A,
- Chinese patent application no. CN 105969069 A,
- Chinese patent application no. CN 106833248 A,
- Chinese patent application no. CN 107189573 A,
- Chinese patent application no. CN 107216768 A,
- Chinese patent no. CN 104946061 B,
- German patent application no. DE 102011003619 A1,
- International patent application no. WO 2015/156851 A2,
- International patent application no. WO 2015/160764 A1,
- Korean patent no. KR 101459263 B1,
- Korean patent no. KR 101717128 B1,
- Intersleek® 1100SR: Advanced Fluoropolymer Foul Release Coating, 2015, by International®, AzkoNobel®, and
- Intersleek® 1100SR: Biocide-free, slime release fouling control coating, 2017, International®, AzkoNobel®.

**Claims**

**1.** A coating composition for producing a coating, the coating composition comprising a mixture of:

• a thermosetting resin system,
• graphene nanoplatelets, and
• a natural or synthetic oil,

wherein the graphene nanoplatelets and the natural or synthetic oil are dispersed in the thermosetting resin system;
wherein the thermosetting resin system comprises an allyl resin, an amino resin, a polyester resin, a bis-maleimide resin, a cyanate ester resin, an epoxy resin, a furan resin, a phenolic resin, a polyurea resin, a polyurethane resin, a silicone resin, or a vinyl ester resin; and
wherein the synthetic oil is a polyalphaolefin oil, a diester oil, a polyolester oil, a phosphate ester oil, a polyalkylene glycol oil, or a silicone oil; or
the natural oil is Albizia benth oil, anchovy oil, argemone oil, avocado oil, canola oil, Capparis zeylanica oil, Cardamine impatiens oil, castor oil, coconut oil, Coriaria oil, corn oil, cottonseed oil, crambe oil, fish oil, grape seed oil, hemp oil, laurel oil, lesquerollic acid, linseed oil, lumbang oil, meadowfoam seed oil, Mesua ferrea oil, mineral oil, mustard oil, neem oil, olive oil, palm oil, peanut oil, pongamia oil, radish oil, rapeseed oil, Ricinus communis oil, rubber seed oil, safflower oil, Santalum album oil, Sebastiana commersoniana oil, sesame oil, Strophantus oil, soybean oil, sugar apple (Annona squamosa) oil, sunflower oil, tigernut oil, or tung oil.

**2.** The composition of claim 1, wherein the thermosetting resin system comprises a silicone resin, a polyester resin, or an epoxy resin;

preferably the thermosetting resin system comprises an epoxy-functional silicone resin or an aliphatic-bisphenol A epoxy resin.

**3.** The composition of claim 1 or 2, wherein the composition has a graphene nanoplatelets content of up to 15 wt%, based on the total weight of the composition,
preferably the composition has a graphene nanoplatelets content of between about 0.1 and about 0.5 wt%, or more preferably about 0.3 wt%, based on the total weight of the composition.

**4.** The composition of any one of claims 1 to 3, wherein the natural oil is canola oil, sunflower oil, or soybean oil; preferably the natural oil is canola oil.

**5.** The composition of any one of claims 1 to 4, wherein the composition has an oil content of up to 10 wt%, based on the total weight of the composition.

**6.** The composition of any one of claims 1 to 5, comprising:

(i) copper powder, wherein the copper powder is a powder of elemental copper, a copper oxide, or a copper salt, preferably a powder of elemental copper,
and optionally, the composition has a copper powder content of up to 20 wt%, based on the total weight of the composition;
(ii) titanium nanoparticles, wherein the titanium nanoparticles are nanoparticles of elemental titanium, titanium dioxide, or a titanium salt, preferably nanoparticles of titanium dioxide,
and optionally, the composition has a titanium nanoparticles content of up to 8 wt%, based on the total weight of the composition; and/or
(iii) phosphorous, zinc sulfide, strontium aluminate, or a mixture thereof, and preferably a mixture of phosphorous, zinc sulfide, and strontium aluminate,
and optionally, the composition has a phosphorous content of up to 5 wt%, a zinc sulfide content of up to 5 wt%, and a strontium aluminate content of up to 5 wt%, based on the total weight of the composition.

**7.** The composition of claim 1, wherein the composition comprises:

- graphene nanoplatelets, and
- canola oil,

wherein the composition has a graphene nanoplatelets content of about 0.3 wt% and a canola oil content of about 5 wt%, based on the total weight of the composition.

**8.** The composition of any one of claims 1 to 7, wherein the thermosetting resin system is a two-part thermosetting resin system comprising a hardener and a thermosetting resin and wherein the graphene nanoplatelets and the natural or synthetic oil are dispersed in either or both of the hardener and the thermosetting resin, wherein optionally the hardener is an amine hardener and the thermosetting resin is an epoxy resin.

**9.** The composition of claim 8, wherein fatty alkyl or alkenyl carboxylates are grafted onto the thermosetting resin.

**10.** The composition of claim 8, wherein fatty amides are dispersed in the thermosetting resin or hardener.

**11.** A coating comprising at least one coat of a coating, produced from the coating composition of any one of claims 1 to 10.

**12.** A substrate comprising a surface coated with at least one coat of a coating produced from the coating composition of any one of claims 1 to 10, optionally
the substrate is a marine equipment, a sensor for use in a wet environment, an automobile part, an agriculture equipment, a water-power generation equipment, or an oil-gas industry equipment, wherein preferably the substrate is marine equipment and the marine equipment is a boat, a ship or a vessel, a buoy, a fish trap, an underwater equipment, or a submarine.

**13.** A method of coating a surface of a substrate, the method comprising

a) cleaning and drying the surface,

b) optionally abrading the surface, and
c) applying at least one coat of the coating composition of any one of claims 1 to 10, preferably at least two coats, to produce a coating;

wherein optionally the at least one coat of the coating composition is applied in the absence of a primer coating, or in the absence of a tie coat.

**14.** A kit for producing a composition of any one of claims 1 to 10, the kit comprising:

• the thermosetting resin system,
• the graphene nanoplatelets, and
• the natural or synthetic oil,
wherein the thermosetting resin system is a two-part thermosetting resin system comprising a hardener as a first part and a thermosetting resin as a separate second part,
and wherein the graphene nanoplatelets and the natural or synthetic oil are dispersed in either or both of the hardener and the thermosetting resin.

## Patentansprüche

**1.** Beschichtungszusammensetzung zur Herstellung einer Beschichtung, wobei die Beschichtungszusammensetzung eine Mischung ist aus:

• einem duroplastischen Harzsystem,
• Graphen-Nanoplättchen, und
• einem natürlichen oder synthetischen Öl,
wobei die Graphen-Nanoplättchen und das natürliche oder synthetische Öl in dem duroplastischen Harzsystem verteilt sind;
wobei das duroplastische Harzsystem ein Allyl-Harz, ein Amino-Harz, ein Polyester-Harz, ein Bis-Maleimid-Harz, ein Cyanat-Ester-Harz, ein Epoxid-Harz, ein Furan-Harz, ein phenolisches Harz, ein Polyurea-Harz, ein Polyurethan-Harz, ein Silikon-Harz oder ein VinylEster-Harz aufweist; und
wobei das synthetische Öl ein Polyalphaolefin-Öl, ein Diester-Öl, ein Polyol-Ester-Öl, ein Phosphat-Ester-Öl, ein Polyalkylen-Glykol-Öl oder ein Silikon-Öl ist; oder
das natürliche Öl benthonisches Schirmakazienöl, Sardellenöl, Argemonenöl, Avocadoöl, Rapsöl, Capparis-Zeylanica-Öl, Cardamin-Impatiens-Öl, Castoröl, Kokosöl, Coriaria-Öl, Getreideöl, Baumwollsaatöl, Crambeöl, Fischöl, Traubenkernöl, Hanföl, Lorbeeröl, Lesquerollsäure, Leinöl, Lumbang-Öl, Mesua ferrea-Öl, Mineralöl, Senföl, Neemöl, Olivenöl, Palmöl, Erdnussöl, Nelkenöl, Rettichöl, Rüböl, Rizinusöl, Gummisamenöl, Färberdistelöl, Santalum album-Öl, Sebastiana-Commersoniana-Öl, Sesamöl, Strophantus-Öl, Sojaöl, Zuckerapfel-(Annona squamosal-) Öl, Sonnenblumenöl, Erdmandelöl, oder Wolframöl ist.

**2.** Zusammensetzung nach Anspruch 1, wobei das duroplastische Harzsystem ein Silikon-Harz, ein Polyester-Harz oder ein Epoxid-Harz aufweist;
wobei vorzugsweise das duroplastische Harzsystem ein Epoxid-funktionales Silikon-Harz oder ein Aliphatisch-Bisphenol-A-Epoxid-Harz aufweist.

**3.** Zusammensetzung nach Anspruch 1 oder 2, wobei die Zusammensetzung einen Anteil an Graphen-Nanoplättchen von bis zu 15 Gew.-%, bezogen auf das Gesamtgewicht der Zusammensetzung, aufweist,
wobei vorzugsweise die Zusammensetzung einen Anteil an Graphen-Nanoplättchen von ungefähr 0,1 bis ungefähr 0,5 Gew.-%, oder noch bevorzugter ungefähr 0,3 Gew.-%, bezogen auf das Gesamtgewicht der Zusammensetzung, aufweist.

**4.** Zusammensetzung nach einem der Ansprüche 1 bis 3, wobei das natürliche Öl Rapsöl, Sonnenblumenöl oder Sojaöl ist;
wobei vorzugsweise das natürliche Öl Rapsöl ist.

**5.** Zusammensetzung nach einem der Ansprüche 1 bis 4, wobei die Zusammensetzung einen Ölanteil von bis zu 10 Gew.-%, bezogen auf das Gesamtgewicht der Zusammensetzung, hat.

6. Zusammensetzung nach einem der Ansprüche 1 bis 5, mit:

(i) Kupferpulver, wobei das Kupferpulver ein Pulver aus elementarem Kupfer, einem Kupferoxid oder einem Kupfersalz, vorzugsweise ein Pulver aus elementarem Kupfer, ist,
und wobei optional die Zusammensetzung einen Kupferpulveranteil von bis zu 20 Gew.-%, bezogen auf das Gesamtgewicht der Zusammensetzung, hat;
(ii) Titannanoteilchen, wobei die Titannanoteilchen Nanoteilchen von elementarem Titan, Titandioxid oder einem Titansalz, vorzugsweise Nanoteilchen aus Titandioxid, sind,
und wobei optional die Zusammensetzung einen Anteil an Titannanoteilchen von bis zu 8 Gew.-%, bezogen auf das Gesamtgewicht der Zusammensetzung, hat; und/oder
(iii) Phosphor, Zinksulfid, Strontiumaluminat oder einer Mischung davon, vorzugsweise einer Mischung aus Phosphor, Zinksulfid und Strontiumaluminat,
und wobei optional die Zusammensetzung einen Phosphoranteil von bis zu 5 Gew.-%, einen Zinksulfidanteil von bis zu 5 Gew.-% und einen Strontiumaluminatanteil von bis zu 5 Gew.-%, bezogen auf das Gesamtgewicht der Zusammensetzung, hat.

7. Zusammensetzung nach Anspruch 1, wobei die Zusammensetzung aufweist:

• Graphen-Nanoplättchen, und
• Rapsöl,

wobei die Zusammensetzung einen Anteil an Graphen-Nanoplättchen von ungefähr 0,3 Gew.-% und einen Rapsölanteil von ungefähr 5 Gew.-%, bezogen auf das Gesamtgewicht der Zusammensetzung, hat.

8. Zusammensetzung nach einem der Ansprüche 1 bis 7, wobei das duroplastische Harzsystem ein duroplastisches Zweikomponenten-Harzsystem mit einem Härter und einem duroplastischen Harz ist, und wobei die Graphen-Nanoplättchen und das natürliche oder synthetische Öl in dem Härter und/oder im duroplastischen Harz verteilt sind, wobei optional der Härter ein Amin-Härter und das duroplastische Harz ein Epoxid-Harz ist.

9. Zusammensetzung nach Anspruch 8, wobei Fett-Alkyl- oder Alkenyl-Carboxylplättchen auf dem duroplastischen Harz aufgebracht sind.

10. Zusammensetzung nach Anspruch 8, wobei Fett-Amide in dem duroplastischen Harz oder Härter verteilt sind.

11. Beschichtung mit mindestens einer Schicht einer Beschichtung, die aus der Beschichtungszusammensetzung nach einem der Ansprüche 1 bis 10 hergestellt ist.

12. Substrat mit einer Oberfläche, die mit mindestens einer Schicht einer Beschichtung beschichtet ist, die aus der Beschichtungszusammensetzung nach einem der Ansprüche 1 bis 10 hergestellt ist, wobei optional
das Substrat eine meeresbezogene Einrichtung, ein Sensor zur Verwendung in einer nassen Umgebung, ein Fahrzeugteil, eine Landwirtschaftseinrichtung, eine Hydroenergieerzeugungseinrichtung oder eine Öl-Gas-Industrieeinrichtung ist, wobei vorzugsweise das Substrat eine meeresbezogene Einrichtung und die meeresbezogene Einrichtung ein Boot, ein Schiff oder Frachter, eine Boje, eine Fischfalle, eine Unterwassereinrichtung oder ein U-Boot ist.

13. Verfahren zur Beschichtung einer Oberfläche eines Substrats, wobei das Verfahren umfasst

a) Reinigen und Trocknen der Oberfläche,
b) optional Abtragen von Material an der Oberfläche, und
c) Aufbringen mindestens einer Schicht der Beschichtungszusammensetzung nach einem der Ansprüche 1 bis 10, vorzugsweise mindestens zwei Schichten, um eine Beschichtung herzustellen;

wobei optional die mindestens eine Schicht der Beschichtungszusammensetzung in Abwesenheit einer Primer-Beschichtung oder in Abwesenheit einer Grundierung aufgebracht wird.

14. Kit zur Herstellung einer Zusammensetzung nach einem der Ansprüche 1 bis 10, wobei das Kit aufweist:

• das duroplastische Harzsystem,
• die Graphen-Nanoplättchen, und

- das natürliche oder synthetische Öl,

wobei das duroplastische Harzsystem ein duroplastisches Zweikomponenten-Harzsystem mit einem Härter als erstem Teil und einem duroplastischen Harz als separatem zweiten Teil ist,
und wobei die Graphen-Nanoplättchen und das natürliche oder synthetische Öl in dem Härter und/oder dem thermoplastischen Harz verteilt sind.

**Revendications**

**1.** Composition de revêtement pour la production d'un revêtement, la composition de revêtement comprenant un mélange de :

- un système de résine thermodurcissable,
- des nanoplaquettes de graphène, et
- une huile naturelle ou synthétique,

dans laquelle les nanoplaquettes de graphène et l'huile naturelle ou synthétique sont dispersées dans le système de résine thermodurcissable ;
dans laquelle le système de résine thermodurcissable comprend une résine d'allyle, une résine amino, une résine de polyester, une résine de bismaléimide, une résine d'ester de cyanate, une résine époxy, une résine de furane, une résine phénolique, une résine de polyurée, une résine de polyuréthane, une résine de silicone, ou une résine d'ester vinylique ; et
dans laquelle l'huile synthétique est une huile de poly-alpha-oléfine, une huile de diester, une huile de polyolester, une huile d'ester de phosphate, une huile de polyalkylèneglycol, ou une huile de silicone ; ou
l'huile naturelle est une huile d'Albizia benth, huile d'anchois, huile d'argemone, huile d'avocat, huile de canola, huile de Capparis zeylanica, huile de Cardamine impatiens, huile de ricin, huile de coco, huile de Coriaria, huile de maïs, huile de graines de coton, huile de crambe, huile de poisson, huile de pépins de raisin, huile de chanvre, huile de laurier, acide lesquérolique, huile de lin, huile de bancoulier, huile de graines de limnanthe, huile de Mesua ferrea, huile minérale, huile de moutarde, huile de margousier, huile d'olive, huile de palme, huile d'arachide, huile de pongamia, huile de radis, huile de colza, huile de Ricinus communis, huile de graines d'hévéa, huile de carthame, huile de Santalum album, huile de Sebastiana commersoniana, huile de sésame, huile de Strophantus, huile de soja, huile de pomme cannelle (Annona squamosa), huile de tournesol, huile de souchet, ou huile d'abrasin.

**2.** Composition selon la revendication 1, dans laquelle le système de résine thermodurcissable comprend une résine de silicone, une résine de polyester, ou une résine époxy ;
de préférence le système de résine thermodurcissable comprend une résine de silicone à fonction époxy ou une résine époxy à base de bisphénol A-aliphatique.

**3.** Composition selon la revendication 1 ou 2, dans laquelle la composition a une teneur en nanoplaquettes de graphène allant jusqu'à 15 % en poids, rapporté au poids total de la composition,
de préférence la composition a une teneur en nanoplaquettes de graphène comprise entre environ 0,1 et environ 0,5 % en poids, ou plus préférentiellement d'environ 0,3 % en poids, rapporté au poids total de la composition.

**4.** Composition selon l'une quelconque des revendications 1 à 3, dans laquelle l'huile naturelle est une huile de canola, huile de tournesol, ou huile de soja ;
de préférence l'huile naturelle est une huile de canola.

**5.** Composition selon l'une quelconque des revendications 1 à 4, dans laquelle la composition a une teneur en huile allant jusqu'à 10 % en poids, rapporté au poids total de la composition.

**6.** Composition selon l'une quelconque des revendications 1 à 5, comprenant :

(i) de la poudre de cuivre, dans laquelle la poudre de cuivre est une poudre de cuivre élémentaire, d'un oxyde de cuivre, ou d'un sel de cuivre, de préférence une poudre de cuivre élémentaire,
et éventuellement, la composition a une teneur en poudre de cuivre allant jusqu'à 20 % en poids, rapporté au poids total de la composition ;
(ii) des nanoparticules de titane, dans laquelle les nanoparticules de titane sont des nanoparticules de titane élémentaire, de dioxyde de titane, ou d'un sel de titane, de préférence des nanoparticules de dioxyde de titane,

et éventuellement, la composition a une teneur en nanoparticules de titane allant jusqu'à 8 % en poids, rapporté au poids total de la composition ; et/ou
(iii) du phosphore, du sulfure de zinc, de l'aluminate de strontium, ou un mélange de ceux-ci, et de préférence un mélange de phosphore, de sulfure de zinc, et d'aluminate de strontium,
et éventuellement, la composition a une teneur en phosphore allant jusqu'à 5 % en poids, une teneur en sulfure de zinc allant jusqu'à 5 % en poids, et une teneur en aluminate de strontium allant jusqu'à 5 % en poids, rapporté au poids total de la composition.

**7.** Composition selon la revendication 1, dans laquelle la composition comprend :

• des nanoplaquettes de graphène, et
• de l'huile de canola,

dans laquelle la composition a une teneur en nanoplaquettes de graphène d'environ 0,3 % en poids et une teneur en huile de canola d'environ 5 % en poids, rapporté au poids total de la composition.

**8.** Composition selon l'une quelconque des revendications 1 à 7, dans laquelle le système de résine thermodurcissable est un système de résine thermodurcissable en deux parties comprenant un durcisseur et une résine thermodurcissable et dans laquelle les nanoplaquettes de graphène et l'huile naturelle ou synthétique sont dispersées dans l'un ou l'autre ou les deux parmi le durcisseur et la résine thermodurcissable, dans laquelle éventuellement le durcisseur est un durcisseur de type amine et la résine thermodurcissable est une résine époxy.

**9.** Composition selon la revendication 8, dans laquelle des carboxylates d'alkyle ou d'alcényle gras sont greffés sur la résine thermodurcissable.

**10.** Composition selon la revendication 8, dans laquelle des amides gras sont dispersés dans la résine thermodurcissable ou le durcisseur.

**11.** Revêtement comprenant au moins une couche d'un revêtement, produit à partir de la composition de revêtement selon l'une quelconque des revendications 1 à 10.

**12.** Substrat comprenant une surface revêtue d'au moins une couche d'un revêtement produit à partir de la composition de revêtement selon l'une quelconque des revendications 1 à 10, éventuellement
le substrat est un équipement marin, un capteur destiné à être utilisé dans un environnement humide, une pièce automobile, un équipement agricole, un équipement de production d'énergie hydraulique, ou un équipement du secteur pétrolier et gazier, dans lequel de préférence le substrat est un équipement marin et l'équipement marin est un navire, un bateau ou une embarcation, une bouée, une nasse à poissons, un équipement immergé, ou un sous-marin.

**13.** Procédé pour revêtir une surface d'un substrat, le procédé comprenant

a) un nettoyage et un séchage de la surface,
b) éventuellement, une abrasion de la surface, et
c) une application d'au moins une couche de la composition de revêtement selon l'une quelconque des revendications 1 à 10, de préférence d'au moins deux couches, pour produire un revêtement ;

dans lequel éventuellement ladite au moins une couche de la composition de revêtement est appliquée en l'absence de revêtement d'apprêt, ou en l'absence de couche d'accrochage.

**14.** Nécessaire de production d'une composition selon l'une quelconque des revendications 1 à 10, le nécessaire comprenant :

• le système de résine thermodurcissable,
• les nanoplaquettes de graphène, et
• l'huile naturelle ou synthétique,
dans laquelle le système de résine thermodurcissable est un système de résine thermodurcissable en deux parties comprenant un durcisseur en tant que première partie et une résine thermodurcissable en tant que deuxième partie séparée,

et dans laquelle les nanoplaquettes de graphène et l'huile naturelle ou synthétique sont dispersées dans l'un ou l'autre ou les deux parmi le durcisseur et la résine thermodurcissable.

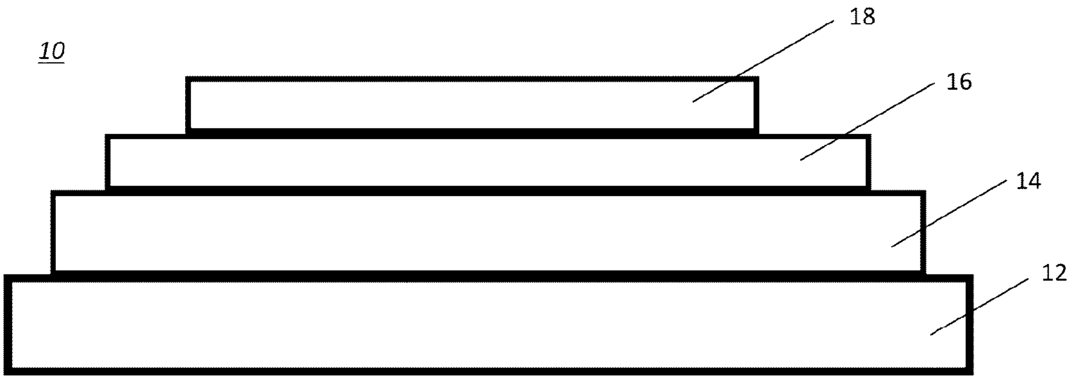


FIG. 1 (PRIOR ART)

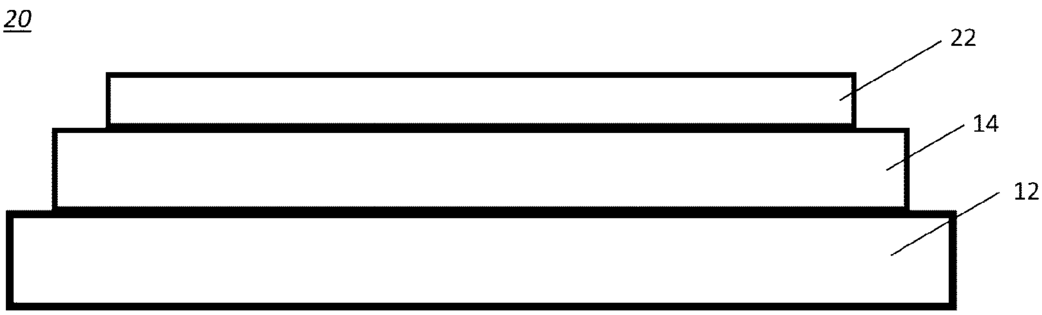


FIG.2A)

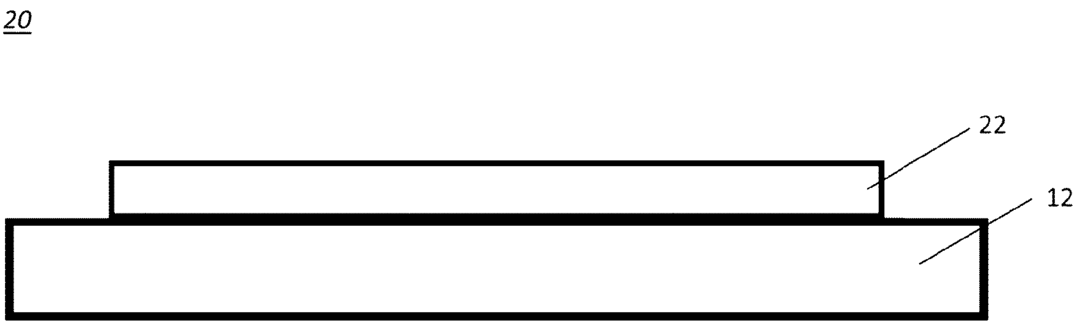


FIG.2B)

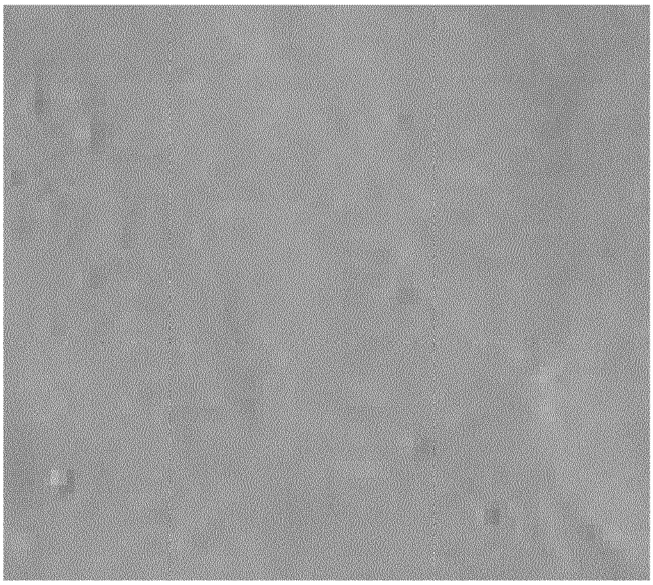

FIG.3A)

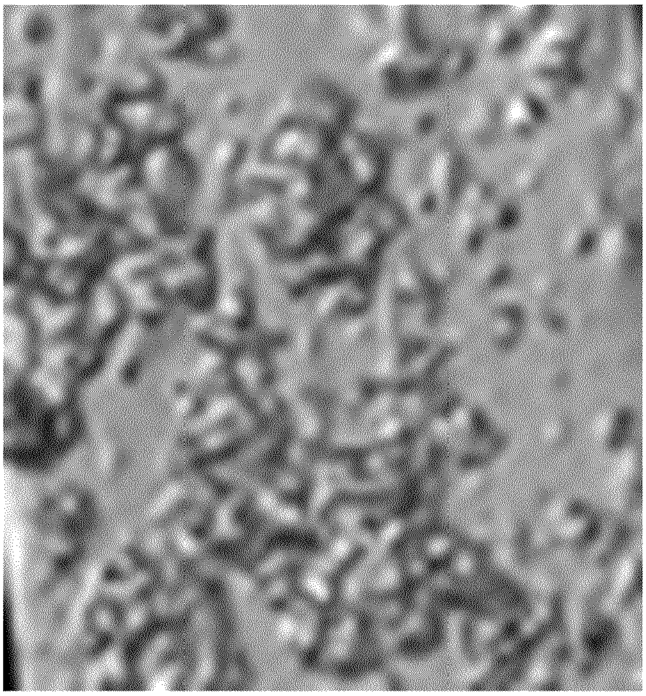

FIG.3B)

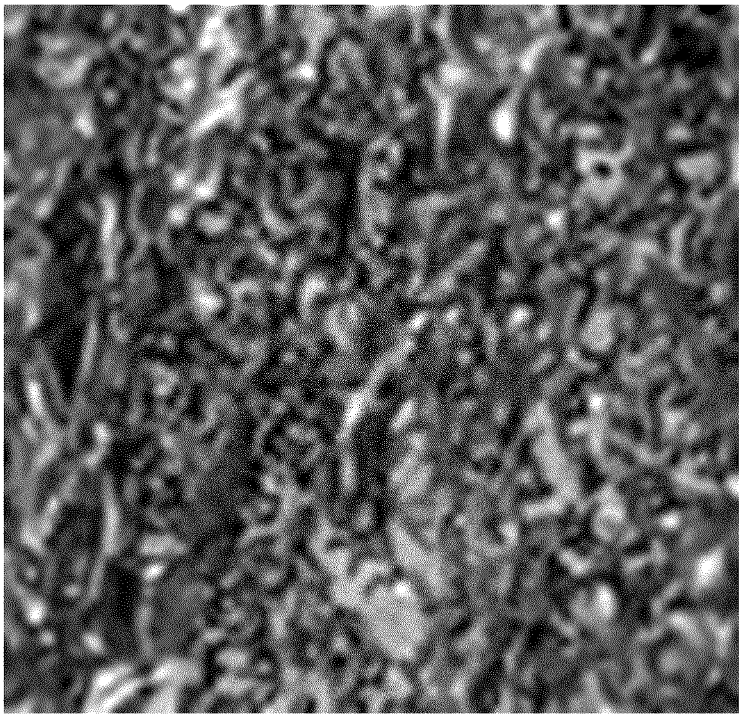

FIG.3C)

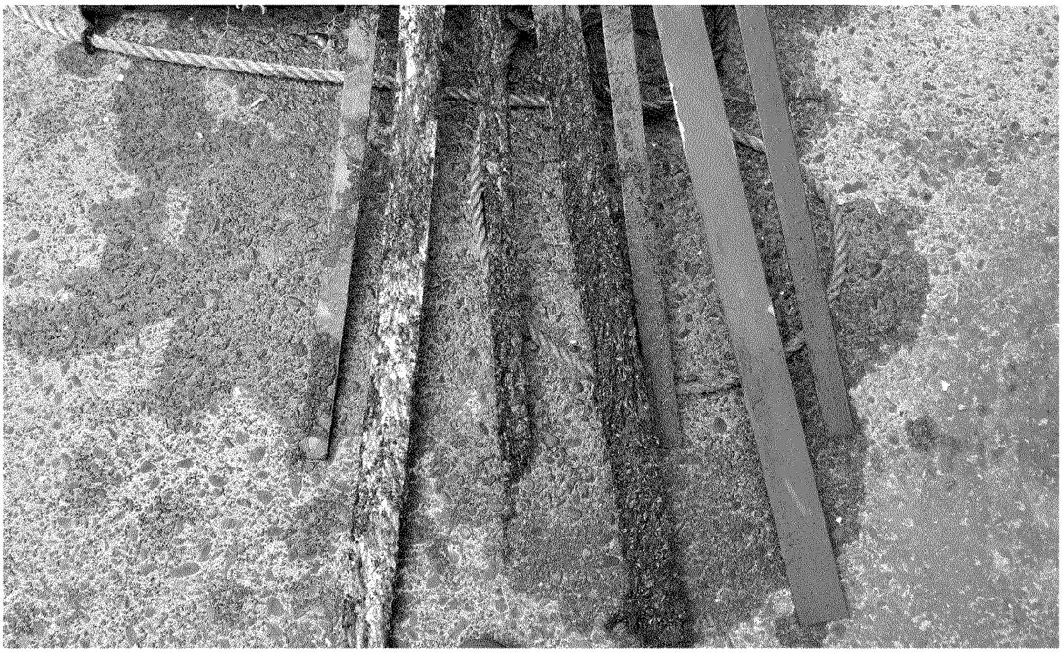

FIG.4

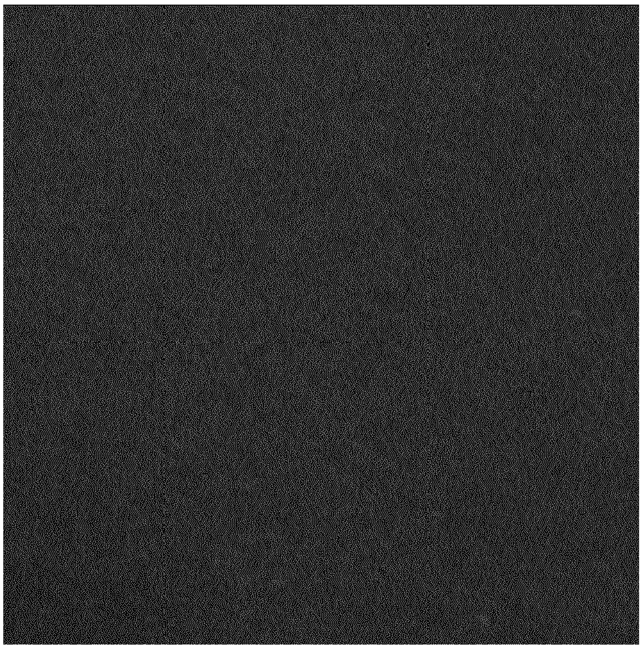

FIG.5A)

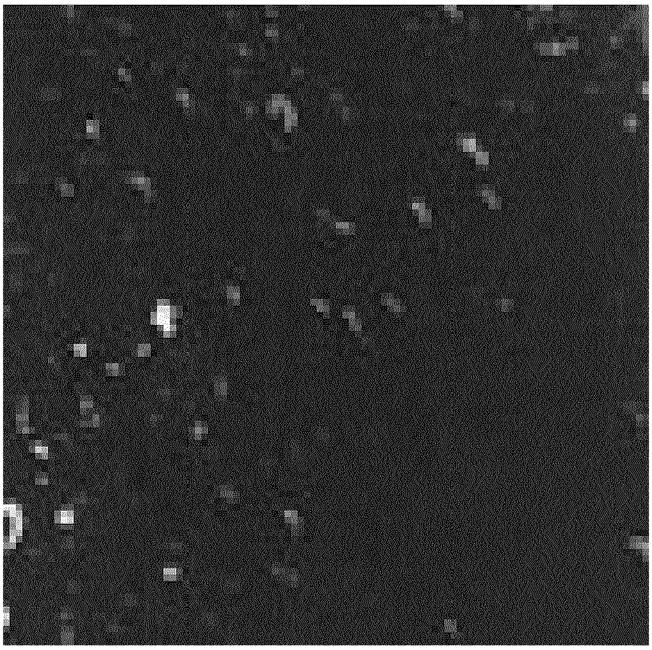

FIG.5B)

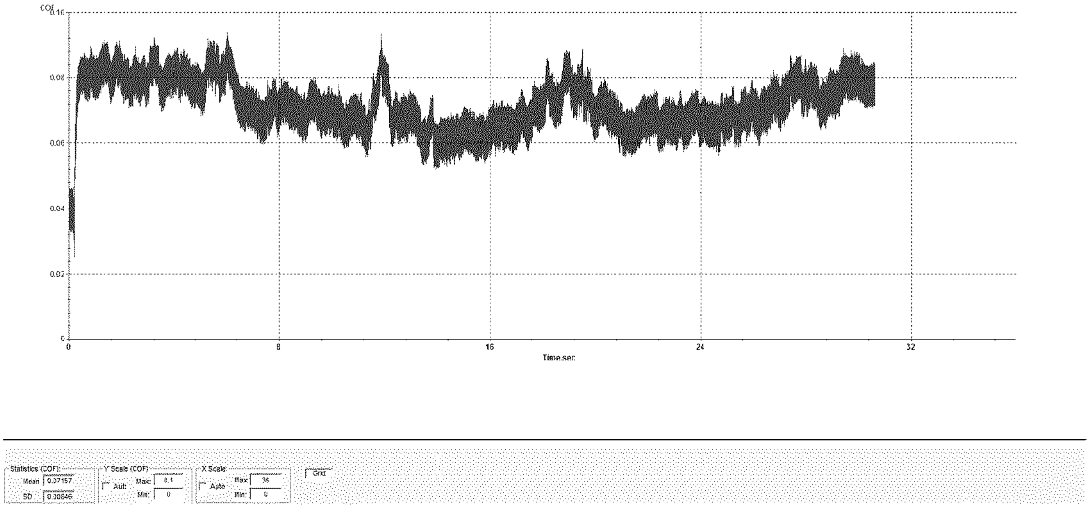
COF
0.10
0.08
0.06
0.04
0.02
0
0
8
16
24
32
Time.sec
Statistics (COF):
Mean 0.07157
SD 0.00646
Y Scale (COF)
Auto
Max: 0.1
Min: 0
X Scale:
Auto
Max: 36
Min: 0
Grid

FIG.6

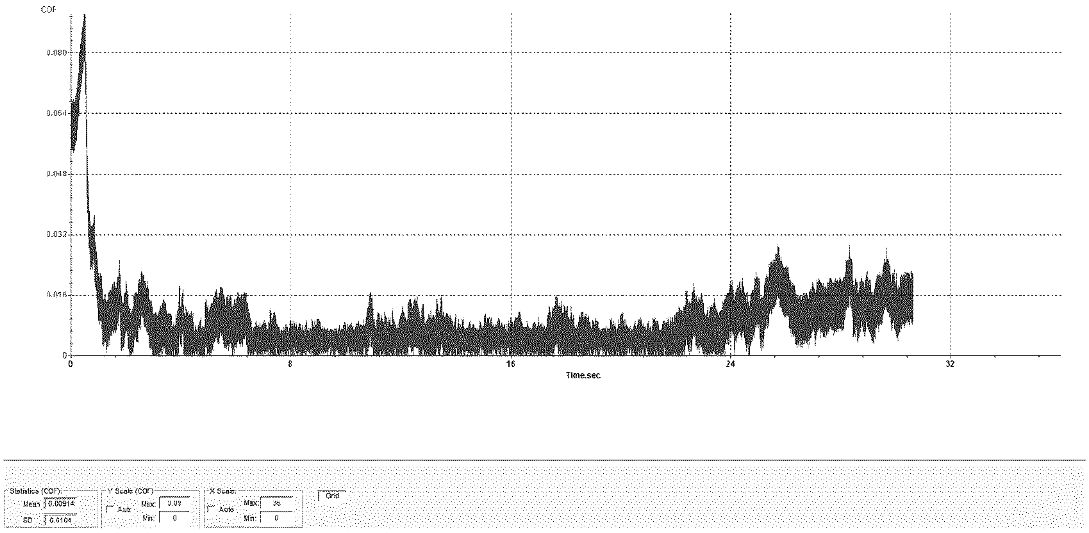
COF
0.080
0.064
0.048
0.032
0.016
0
0
8
16
24
32
Time.sec
Statistics (COF):
Mean 0.00914
SD 0.0104
Y Scale (COF)
Auto
Max: 0.09
Min: 0
X Scale:
Auto
Max: 36
Min: 0
Grid

FIG.7

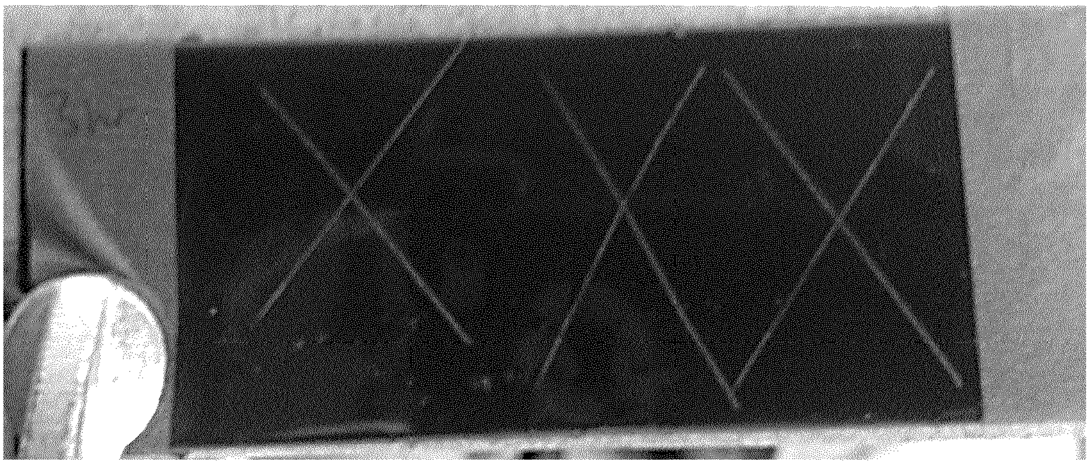


FIG.8A)

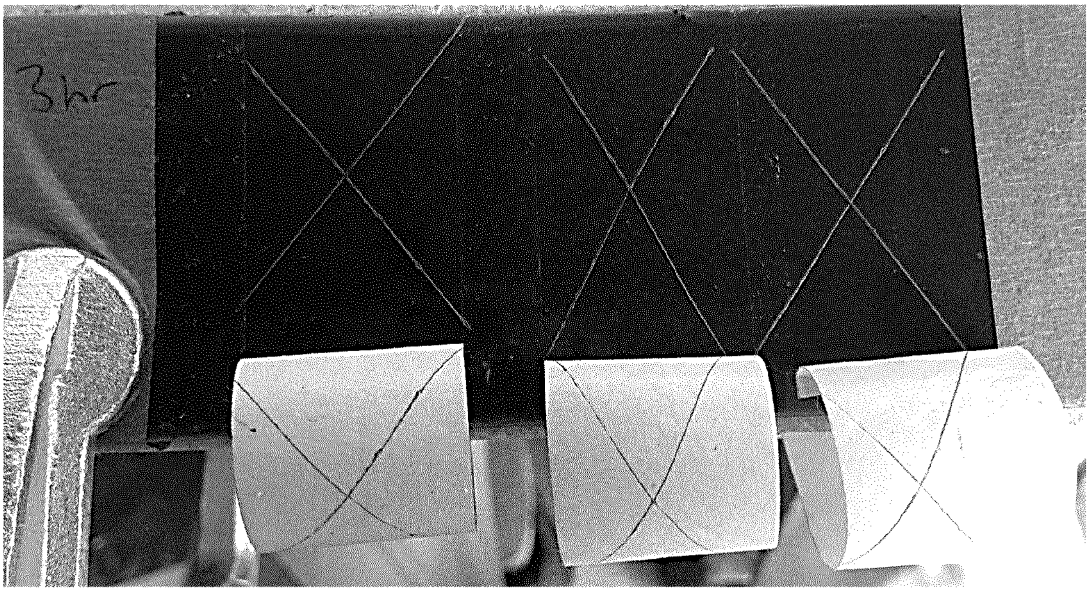


FIG.8B)

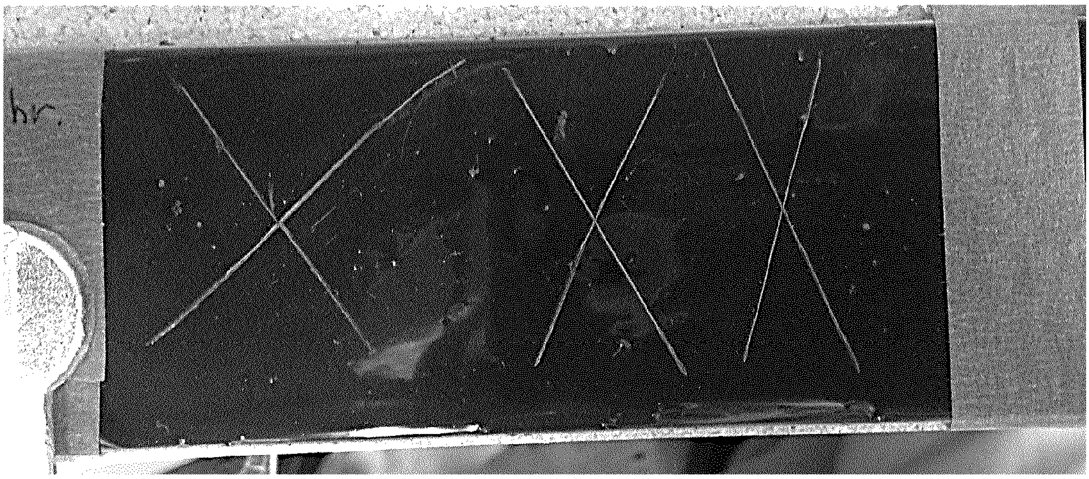

FIG.9A)

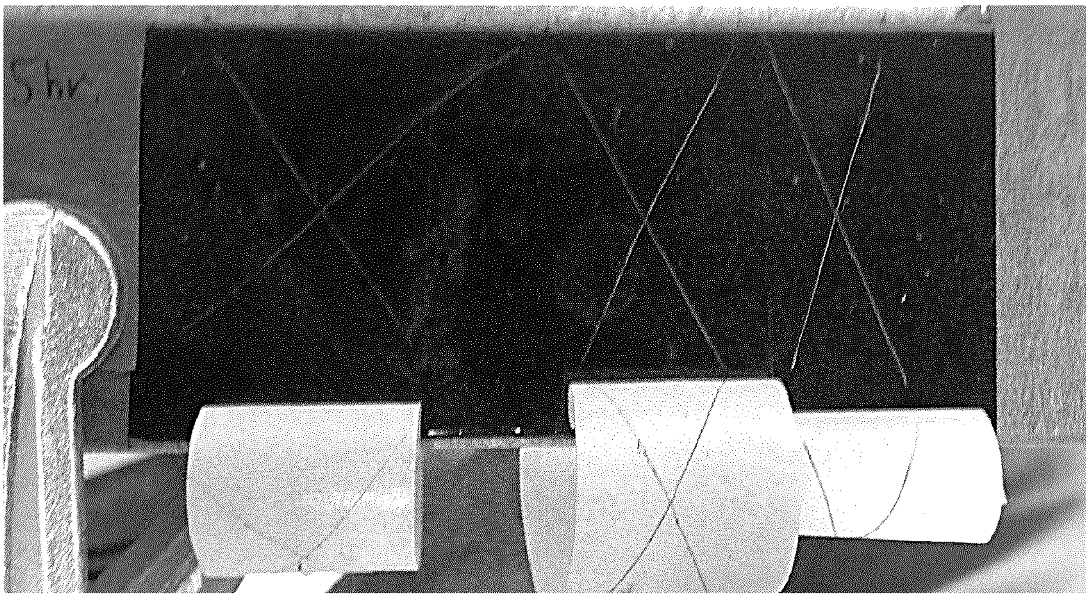

FIG.9B)

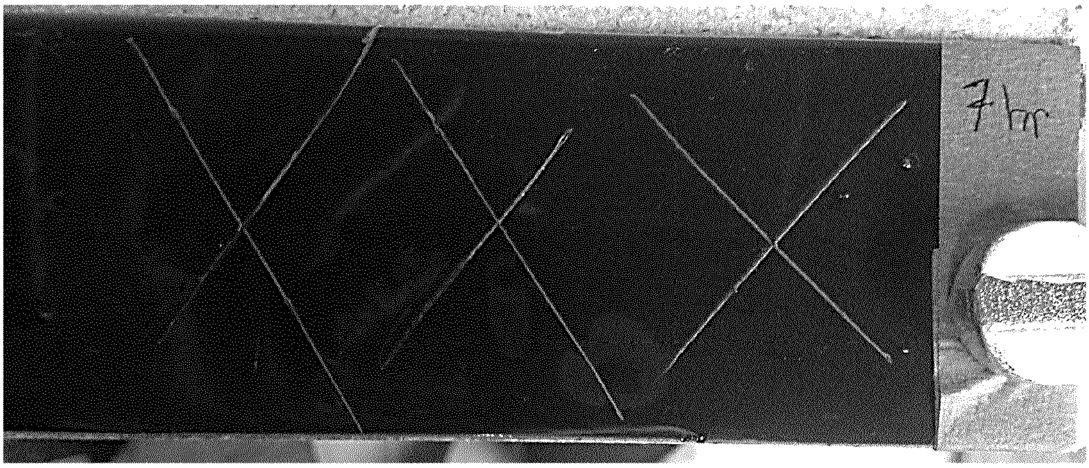


FIG.10A)

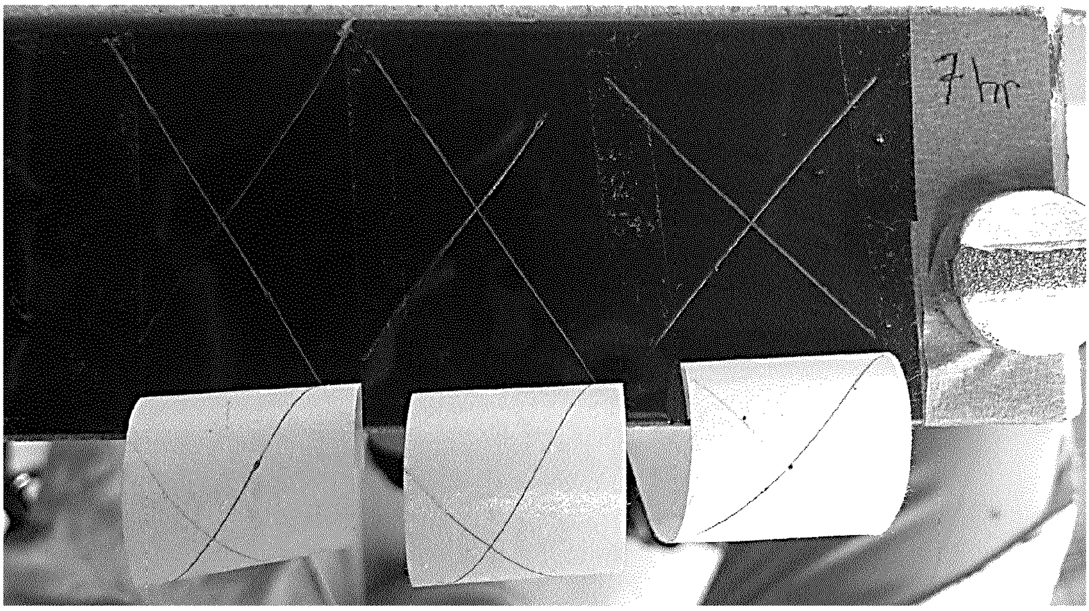


FIG.10B)

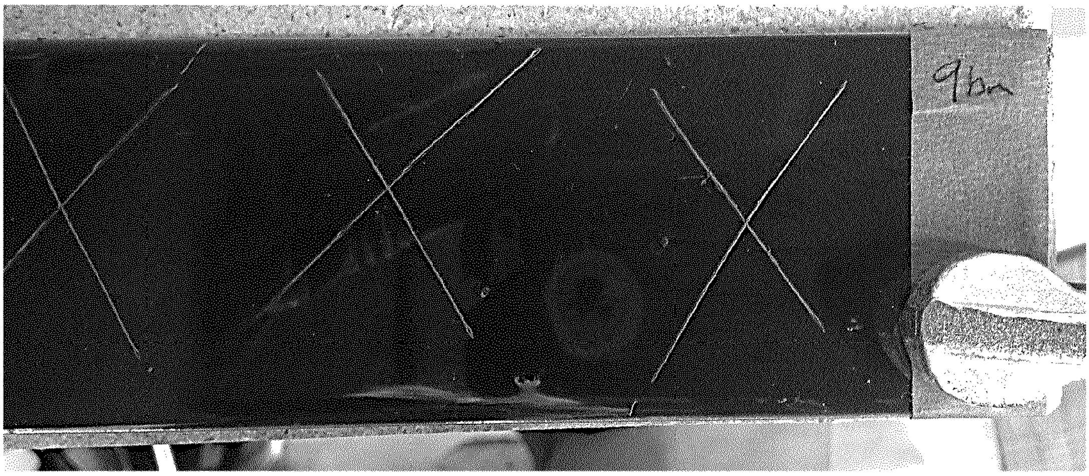


FIG.11A)

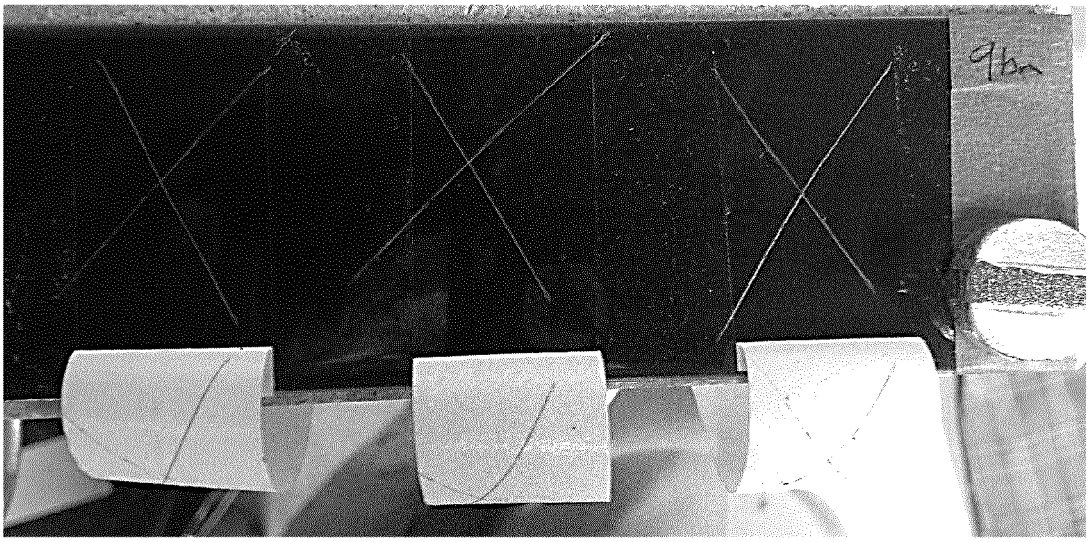


FIG.11B)

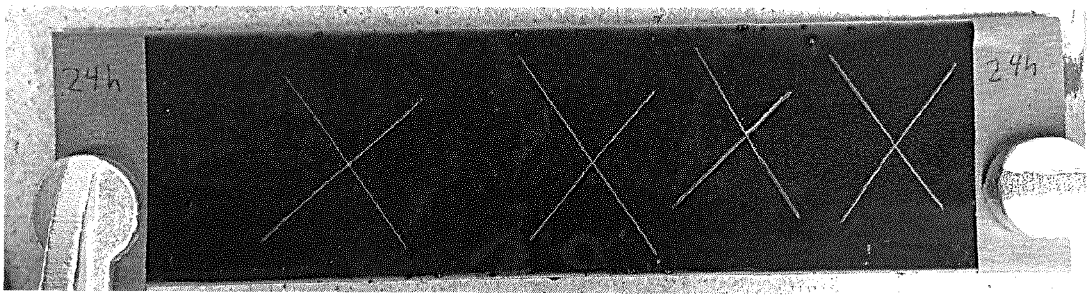


FIG.12A)

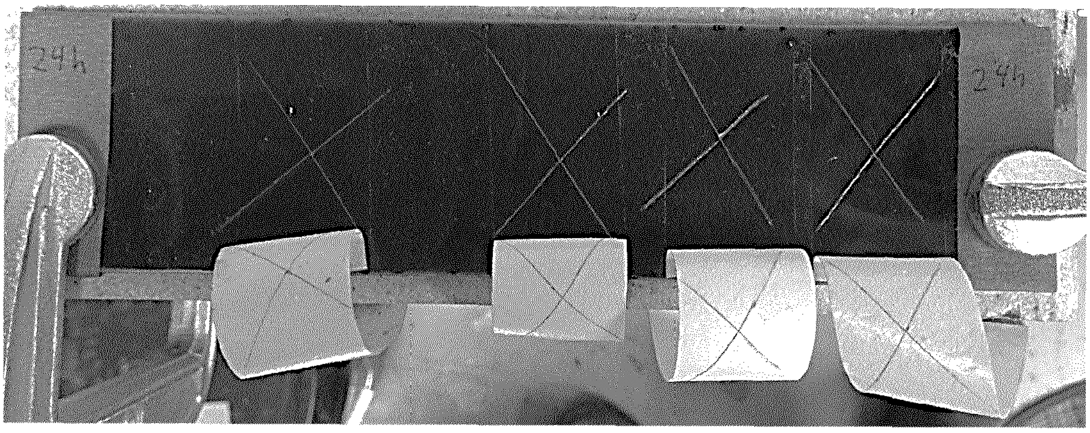


FIG.12B)

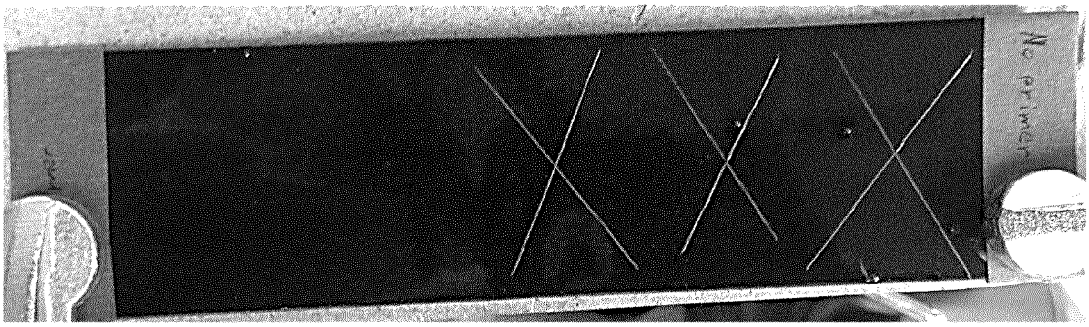


FIG.13A)

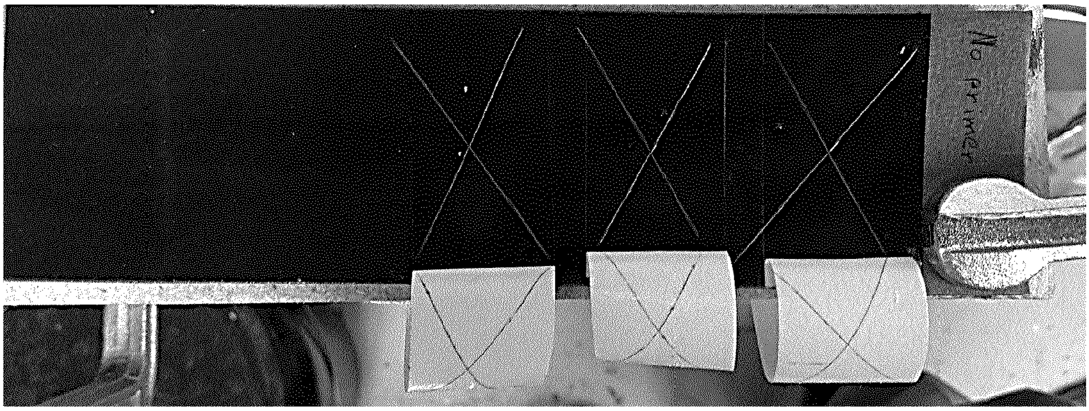


FIG.13B)

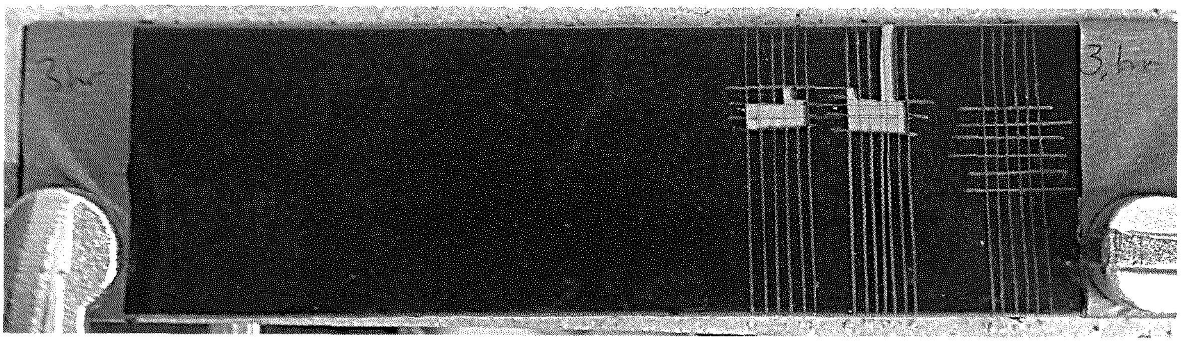

FIG.14

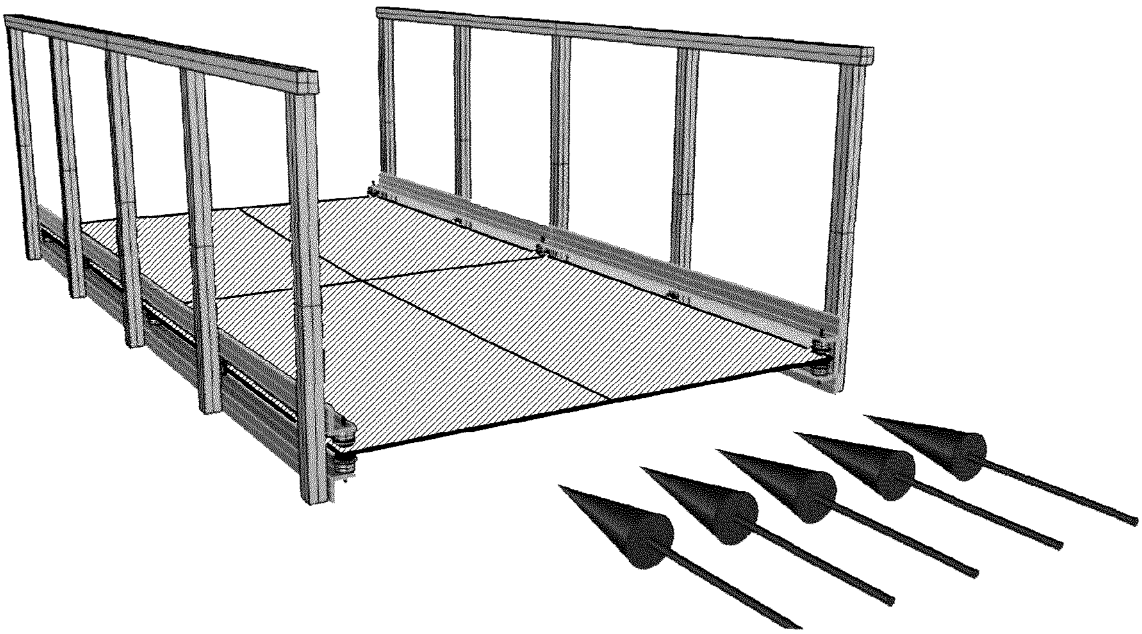

FIG.15

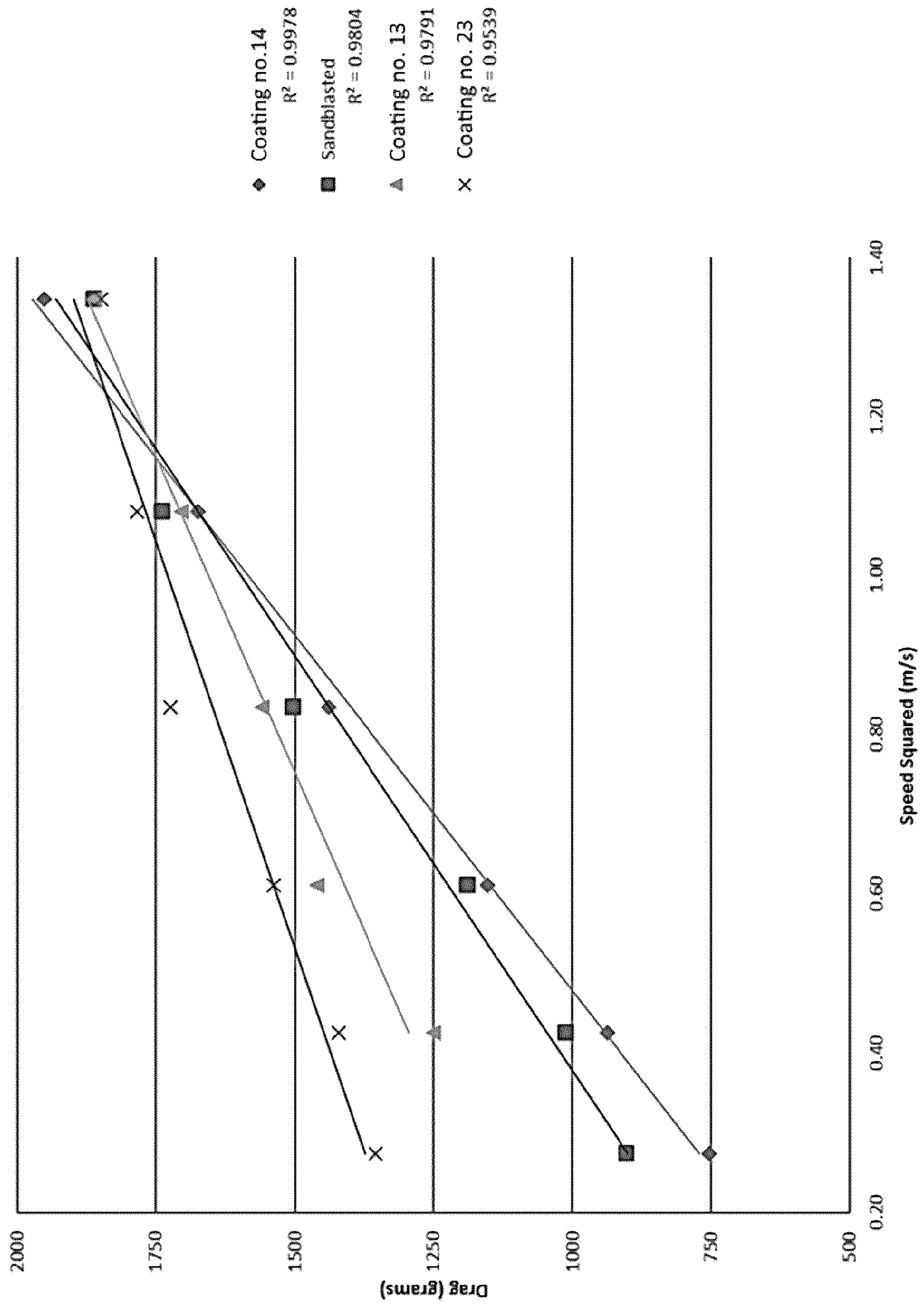
Drag (grams)
2000
1750
1500
1250
1000
750
500
0.20
0.40
0.60
0.80
1.00
1.20
1.40
Speed Squared (m/s)
Coating no.14 $R^2 = 0.9978$
Sandblasted $R^2 = 0.9804$
Coating no. 13 $R^2 = 0.9791$
Coating no. 23 $R^2 = 0.9539$

FIG.16

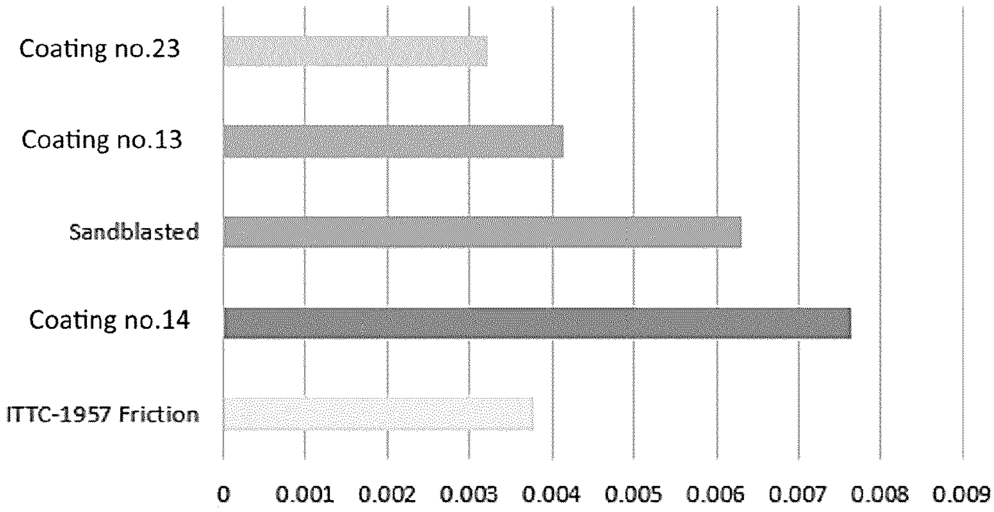
Coating no.23
Coating no.13
Sandblasted
Coating no.14
ITTC-1957 Friction
0
0.001
0.002
0.003
0.004
0.005
0.006
0.007
0.008
0.009

FIG.17

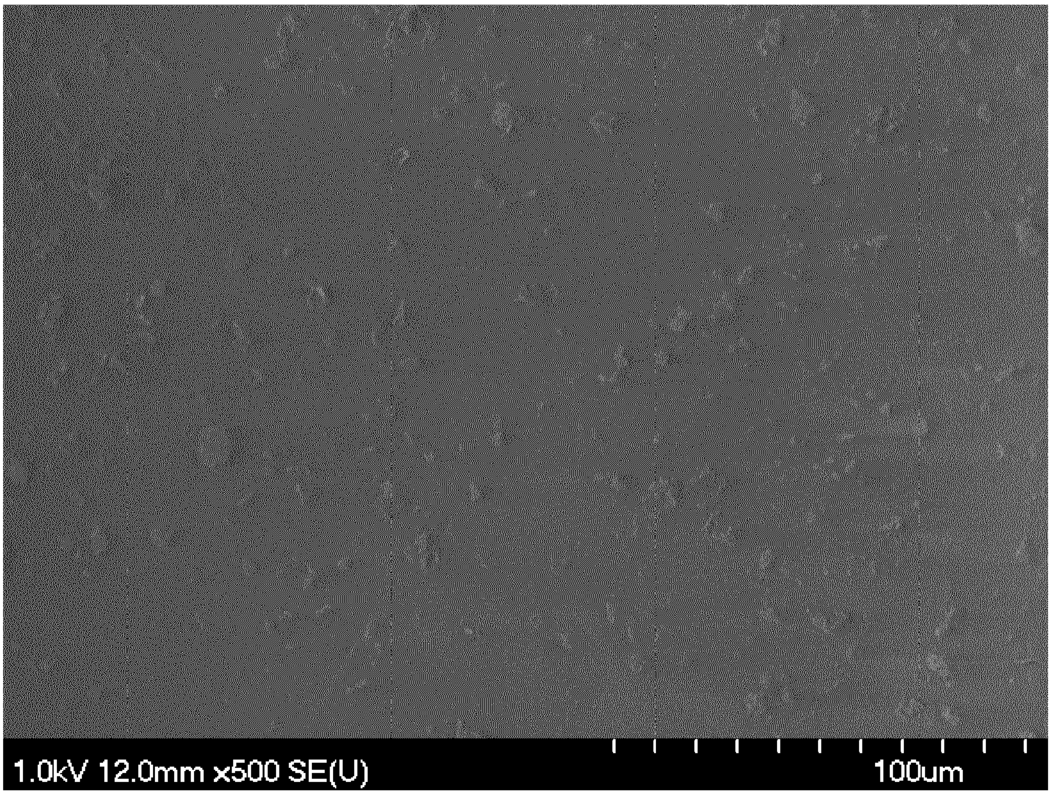
1.0kV 12.0mm x500 SE(U)
100um

FIG.18

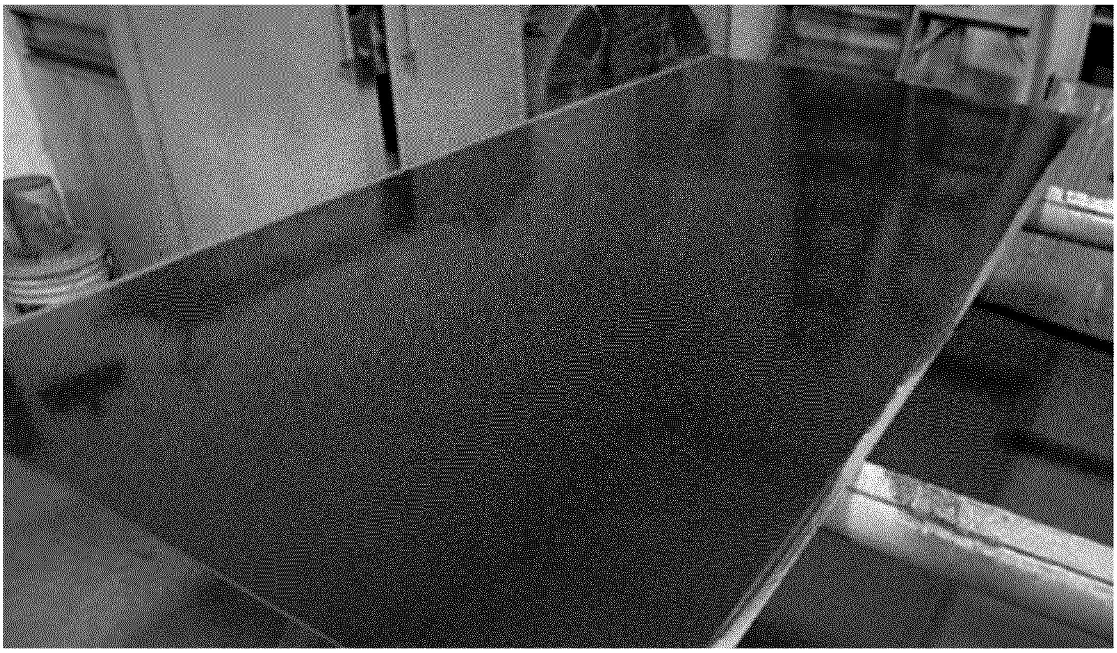

FIG.19

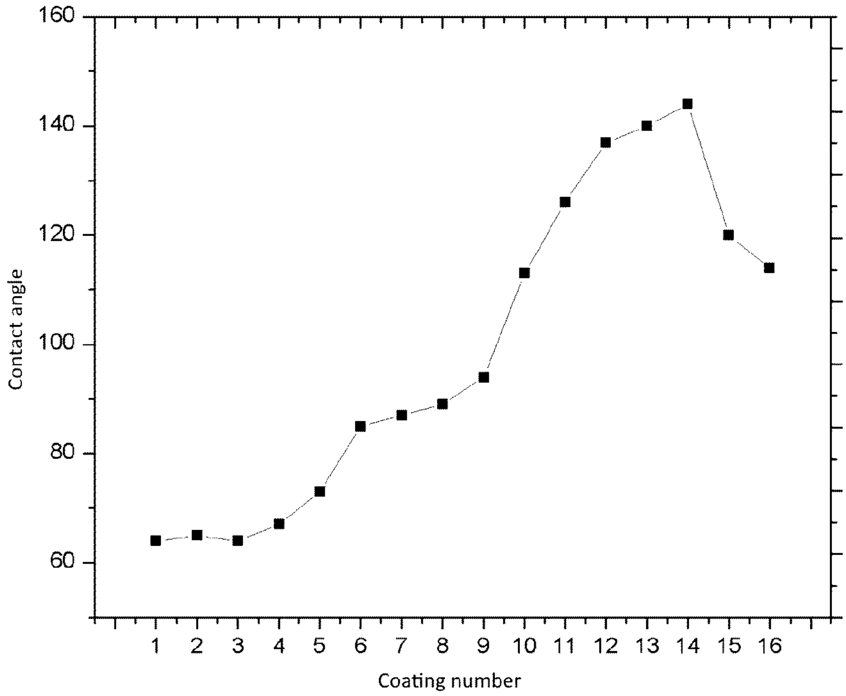
160
140
120
100
80
60
Contact angle
1 2 3 4 5 6 7 8 9 10 11 12 13 14 15 16
Coating number

FIG.20

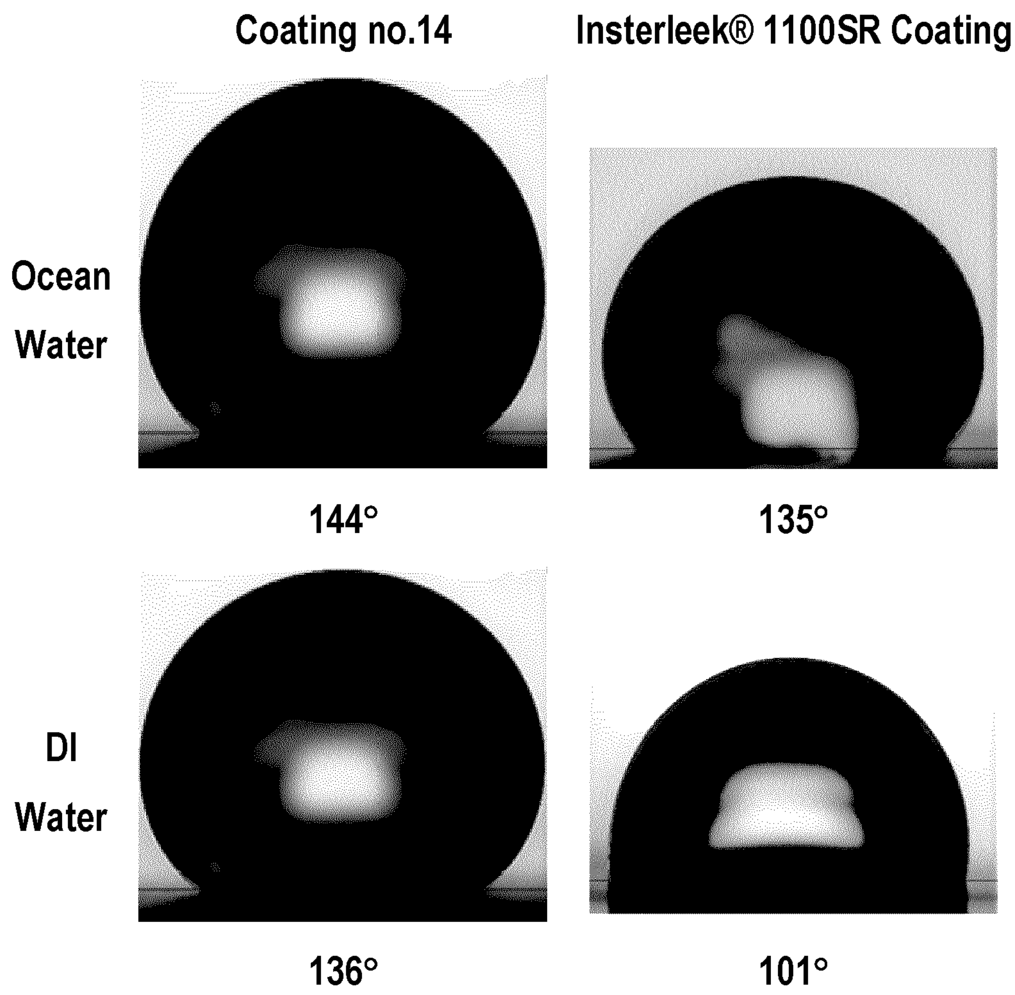
Coating no.14
Insterleek® 1100SR Coating
Ocean Water
144°
135°
DI Water
136°
101°

FIG.21

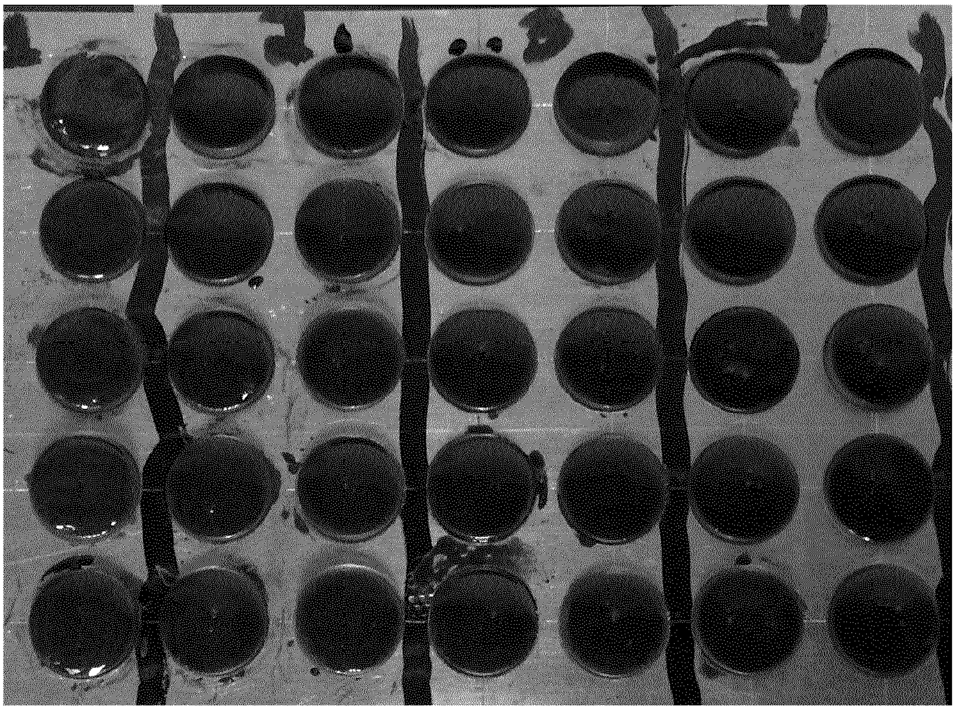

FIG.22A)

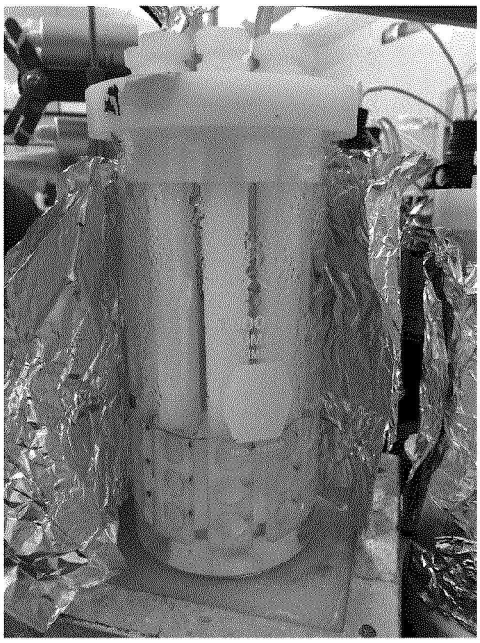

FIG.22B)

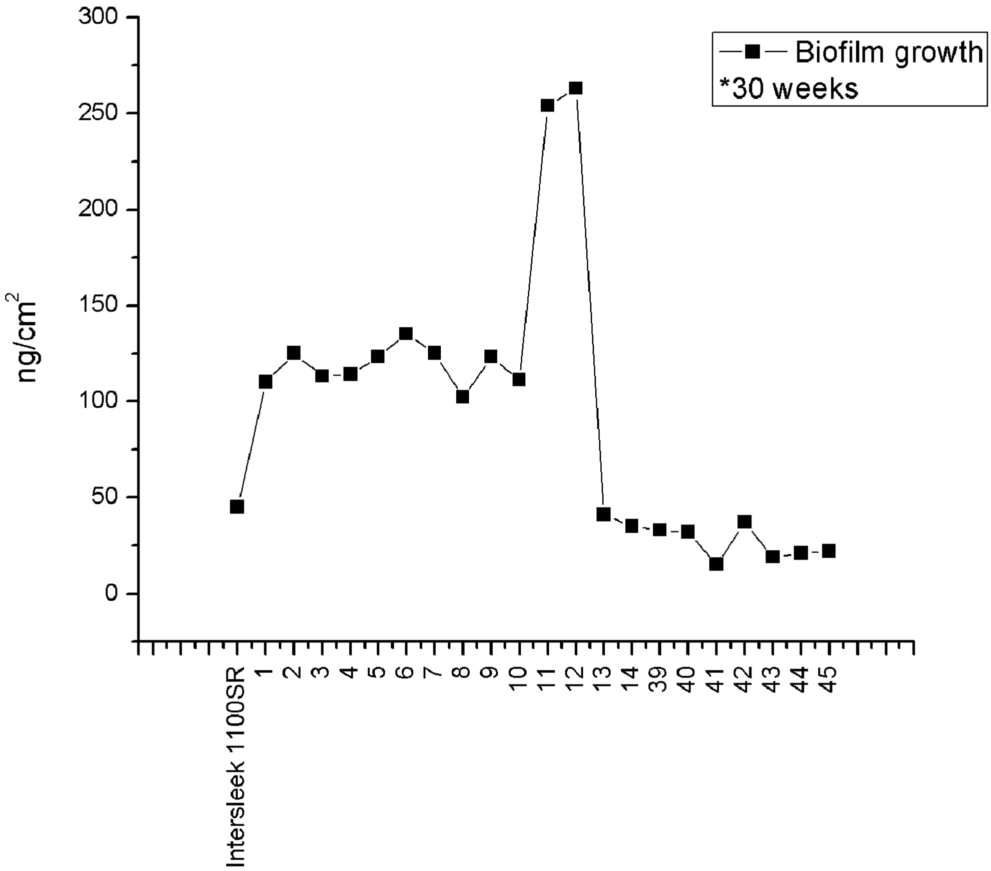
300
250
200
150
100
50
0
ng/cm$^2$
—■— Biofilm growth
*30 weeks
Intersleek 1100SR
1
2
3
4
5
6
7
8
9
10
11
12
13
14
39
40
41
42
43
44
45

FIG.23

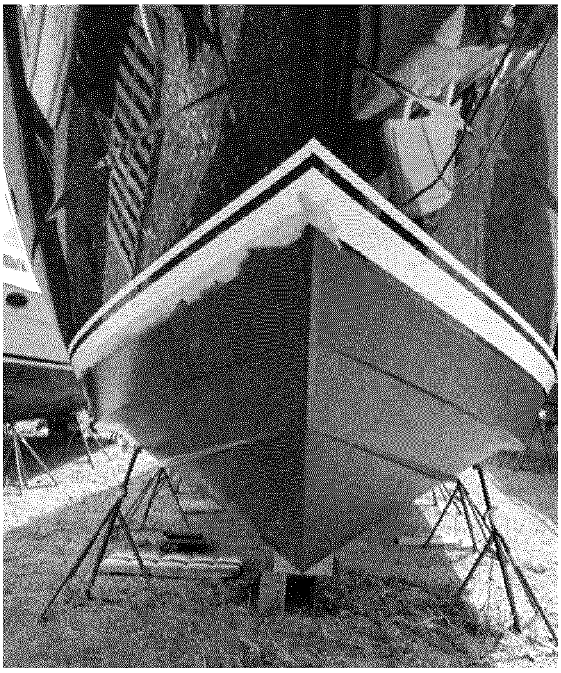

FIG.24A)

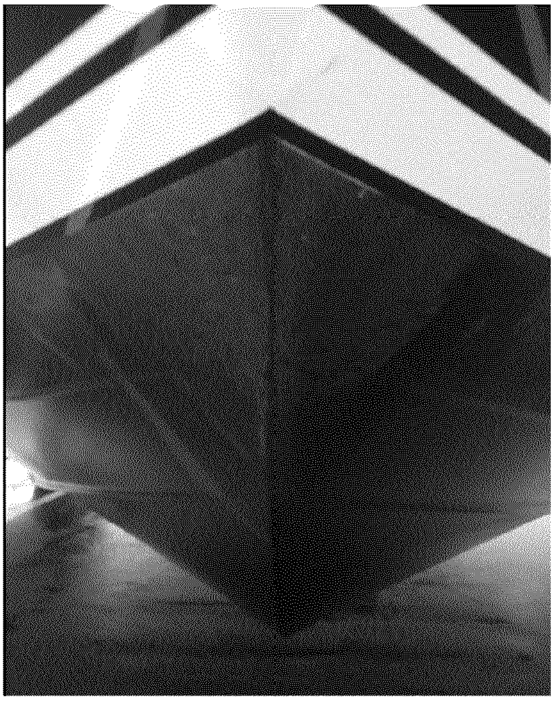

FIG.24B)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- US 20100330025 A1
- US 20150152270 A1
- US 20170037257 A1
- US 20170260401 A1
- CN 103820055 A
- CN 104559669 A
- CN 104974640 A
- CN 105385318 A
- CN 105949946 A
- CN 105969069 A
- CN 106833248 A
- CN 107189573 A
- CN 107216768 A
- CN 104946061 B
- DE 102011003619 A1
- WO 2015156851 A2
- WO 2015160764 A1
- KR 101459263 B1
- KR 101717128 B1


### Non-patent literature cited in the description


- **GANSLAW.** Coating Innovations - The demand for conductive coatings in electronic devise continues to grow. *Adhesives & Sealants Industry (ASI Magazine),* 01 March 2012, 22-23
- **LA et al.** Improved and A Simple Approach for Mass Production of Graphene Nanoplatelets Material. *ChemistrySelect,* 2016, vol. 5, 949-952
- **LINDHOLDT et al.** Effects of biofouling development on drag forces of hull coatings for ocean-going ships: a review. *J Coat Technol Res,* 2015, vol. 12, 415-444
- **LIU et al.** Corrosion Resistance of Graphene-reinforced Waterborne Epoxy Coatings. *Journal of Materials Science & Technology,* May 2016, vol. 32 (5), 425-431
- **MONETTA et al.** The Effect of Graphene on the Protective Properties of Water-Based Epoxy Coatings on Al2024-T3. *International Journal of Corrosion,* 2017, vol. 2017, 1-9
- **ZHANG et al.** Mechanical and Anticorrosive Properties of Graphene/Epoxy Resin Composites Coating Prepared by in-Situ Method. *Int. J. Mol. Sci.,* 2015, vol. 16, 2239-2251
- Intersleek® 1100SR: Advanced Fluoropolymer Foul Release Coating. International®, AzkoNobel, 2015
- Intersleek® 1100SR: Biocide-free, slime release fouling control coating. International®, AzkoNobel, 2017